# EUROPEAN PATENT APPLICATION

(11) **EP 4 478 322 A1**
(43) Date of publication of application: **18.12.2024**
(21) Application number: 24182176.8
(22) Date of filing: 14.06.2024
(51) Int. Cl.: G08G 1/00

(54) **METHOD TO DETECT AND PREVENT ACCIDENTS IN LANE REDUCTIONS USING AUTONOMOUS VEHICLES**

(30) Priority: 14.06.2023 US 202318334712
(71) Applicant: Volvo Car Corporation, 405 31 Göteborg (SE)
(72) Inventor: PEREZ BARRERA, Oswaldo, 40531 Göteborg (SE); LENNARTSSON, Anders, 40531 Göteborg (SE)
(74) Representative: Maiwald GmbH

(57) **Abstract**

An embodiment related to a system (300) comprising a processor (304), a computer vision module (306), and a control module (310); wherein the processor (304) is operable to detect a lane reduction in a nearest disappearing lane (902); detect a neighboring vehicle and a driving action of the neighboring vehicle in the nearest disappearing lane (904); detect a license plate of the neighboring vehicle (906); receive a first signal from the neighboring vehicle for a driving mode (908); detect a point of lane disappearance in the nearest disappearing lane (910); determine a time interval for the neighboring vehicle to reach to the point of lane disappearance (912); execute a risk assessment of a collision based on the driving action (914) and then transmit a control command to an actuator system (318) of a host vehicle based on the risk assessment (916).

## Description

### FIELD OF THE INVENTION

The present disclosure relates generally to the vehicle safety field. More specifically, the present disclosure relates to systems and methods for a lane reduction monitoring method and lane reduction system for an autonomous vehicle.

### BACKGROUND

In a vehicle, the driver remains a critical component of the vehicle's control system as the driver makes numerous decisions directed to the safe operation of the vehicle including speed, steering, obstacle and hazard recognition, and avoidance thereof. Yet, the driver's ability to perform all of these functions can become compromised due to physical factors such as driver fatigue, driver impairment, driver inattention, or other factors such as visibility that reduce the reaction time needed by the driver to successfully avoid hazards.

When a lane ends or is reduced, it can create dangerous situations for human drivers, as they may not be able to react quickly enough to avoid collisions. This is especially true in highspeed or high-traffic areas. Therefore, there is a need for a method and system for autonomous vehicles to navigate the roads safely and efficiently, reducing the risk of accidents and improving the overall experience for passengers and other drivers on the road.

### SUMMARY

The following presents a summary to provide a basic understanding of one or more embodiments described herein. This summary is not intended to identify key or critical elements or delineate any scope of the different embodiments and/or any scope of the claims. The sole purpose of the summary is to present some concepts in a simplified form as a prelude to the more detailed description presented herein.

The specification provides systems and methods for identifying when a lane is ending or being reduced, and then making the appropriate adjustments to the vehicle's speed and trajectory to avoid collisions.

An embodiment relates to a system for lane reduction detection. The system comprises a processor, a computer vision module, a communication module, and a control system, wherein the system is configured to detect, by the processor, a lane reduction in a nearest disappearing lane, detect, by the computer vision module, a neighboring vehicle and a driving action of the neighboring vehicle in the nearest disappearing lane, detect, by the computer vision module, a license plate number of the neighboring vehicle; receive, by the communication module, a signal from the neighboring vehicle for a driving mode; detect, by the computer vision module, a point of lane disappearance in the nearest disappearing lane; determine, by the processor, a time interval for the neighboring vehicle to reach to the point of lane disappearance; detect, via the processor, a driving action of the neighboring vehicle; execute, by the processor, a risk assessment of a collision based on the driving action; and transmit, via the communication module, a control command to an actuator system of a host vehicle based on the risk assessment.

An embodiment relates to a vehicle. The vehicle comprises a sensor, an actuator, and a system further comprising a processor, a computer vision module, a communication module, and a control system, wherein the system is configured to detect, by the processor, a lane reduction in a nearest disappearing lane; detect, by the computer vision module, a neighboring vehicle and a driving action of the neighboring vehicle in the nearest disappearing lane; detect, by the computer vision module, a license plate of the neighboring vehicle; receive, by the communication module, a first signal from the neighboring vehicle for a driving mode; detect, by the computer vision module, a point of lane disappearance in the nearest disappearing lane; determine, by the processor, a time interval for the neighboring vehicle to reach to the point of lane disappearance; detect, via the processor, a driving action of the neighboring vehicle; execute, by the processor, a risk assessment of a collision based on the driving action; and transmit, via the communication module, a control command to an actuator system of a host vehicle based on the risk assessment.

An embodiment relates to a method to detect and prevent possible accidents in lane reduction by a host vehicle. The method comprises detecting a lane reduction in a nearest disappearing lane; detecting a neighboring vehicle in the nearest disappearing lane; detecting a license plate of the neighboring vehicle; receiving a first signal from the neighboring vehicle for a driving mode; detecting a point of lane disappearance in the nearest disappearing lane; determining a time interval for the neighboring vehicle to reach to the point of lane disappearance; detecting a driving action of the neighboring vehicle; executing a risk assessment of a collision based on the driving action and the time interval; and transmitting a control command to an actuator system of the host vehicle based on the risk assessment.

An embodiment relates to a non-transitory computer-readable medium. The non-transitory computer-readable medium has stored thereon instructions executable by a computer system to execute operations comprising: detecting a lane reduction in a nearest disappearing lane; detecting a neighboring vehicle in the nearest disappearing lane; detecting a license plate of the neighboring vehicle; receiving a first signal from the neighboring vehicle for a driving mode; detecting a point of lane disappearance in the nearest disappearing lane; determining a time interval for the neighboring vehicle to reach to the point of lane disappearance; detecting a driving action of the neighboring vehicle; executing a risk assessment of a collision based on the driving action and the time interval; and transmitting a control command to an actuator system of a host vehicle based on the risk assessment.

An embodiment relates to a system for lane reduction detection. The system comprises a processor, a computer vision system, and a control system, wherein the system is configured to be a component of a host vehicle; wherein the processor is configured to: detect a lane reduction in a nearest disappearing lane; detect a neighboring vehicle in the nearest disappearing lane; detect license plate of the neighboring vehicle; receive a first signal from the neighboring vehicle for a driving mode; detect a point of lane disappearance in the nearest disappearing lane; determine a time interval for the neighboring vehicle to reach to the point of lane disappearance; predict a driving action of the neighboring vehicle; execute a risk assessment based on the driving action and the time interval; and transmit a risk signal to the neighboring vehicle based on the risk assessment.

An embodiment relates to a method to detect and prevent possible accidents in lane reduction by a host vehicle. The method comprises detecting a lane reduction in a nearest disappearing lane; detecting a neighboring vehicle in the nearest disappearing lane; detecting license plate of the neighboring vehicle; receiving a first signal from the neighboring vehicle for a driving mode; detecting a point of lane disappearance in the nearest disappearing lane; determining a time interval for the neighboring vehicle to reach to the point of lane disappearance; predicting a driving action of the neighboring vehicle; executing a risk assessment based on the driving action and the time interval; and transmitting a risk signal to the neighboring vehicle based on the risk assessment.

An embodiment relates to a non-transitory computer-readable medium. The non-transitory computer-readable medium has stored thereon instructions executable by a computer system to execute operations comprising detecting a lane reduction; detecting a neighboring vehicle in a nearest disappearing lane; detect license plate of the neighboring vehicle and check in a license database if that license plate number is assigned to a non-autonomous; performing lane width detection to detect a point of lane disappearance in the nearest disappearing lane; determine a time interval for the neighboring vehicle to reach to the point of lane disappearance; predicting a driving action of the neighboring vehicle; executing a risk assessment based on the driving action and the time interval; and transmitting a risk signal to the neighboring vehicle based on the risk assessment.

### BRIEF DESCRIPTION OF THE FIGURES

These and other aspects of the present invention will now be described in more detail, with reference to the appended drawings showing exemplary embodiments of the present invention, in which:

The present disclosure is directed to various embodiments illustrated and described herein with reference to the various drawings, in which like reference numbers are used to denote like systems or assembly components, methods or algorithm steps. The illustrated components of the various systems are not necessarily drawn to scale.
**FIG. 1A and FIG. 1B** show a problem accident scenario raised due to lane reduction, according to one or more embodiments.
**FIG. 2A, FIG. 2B,** and **FIG. 2C** show a real case scenario raised due to lane reduction, according to one or more embodiments.
**FIG. 3A** illustrates a schematic configuration of a lane reduction determination system, according to one or more embodiments.
**FIG. 3B** shows various types of sensors attached to the host vehicle, according to one or more embodiments.
**FIG. 3C** shows various types of actuators attached to the host vehicle, according to one or more embodiments.
**FIG. 4A** is a response of a vehicle comprising the system in a lane reduction situation, according to one or more embodiments.
**FIG. 4B** illustrates a response of a vehicle comprising the system in a lane reduction situation, according to one or more embodiments.
**FIG. 5A** shows a flowchart for a method for detecting lane reduction situations and making the appropriate adjustments to avoid collisions.
**FIG. 5B** shows traffic signage for a lane reduction situation, according to one or more embodiments.
**FIG. 6A** is illustrating a vehicle comprising the system approaching a lane reduction.
**FIG. 6B** is illustrating lane width detection by the vehicle according to one or more embodiments.
**FIG. 6C** illustrates a time period within which a vehicle, comprising the system detecting/tracking a nearby vehicle, can reach to a point of lane disappearance, according to one or more embodiments.
**FIG. 6D, FIG. 6E, FIG. 6F, FIG. 6G****,** **FIG. 6H, FIG. 6I**, and **FIG. 6J** are illustrating various scenarios that may occur during lane reduction.
**FIG. 7A** and **FIG. 7B** illustrate an approaching response of the system when two different types of neighboring vehicles are approaching lane reduction.
**FIG. 8A, FIG. 8B,** and **FIG. 8C** shows an image of a temporary lane closure with signage and obstacles in place, and illustrations of the system's response to a temporarily closed lane.
**FIG. 9A** shows a block diagram of a system of a lane reduction determination system, according to one or more embodiments.
**FIG. 9B** shows a block diagram of a non-transitory computer-readable medium to execute operations so as to detect lane reduction and make appropriate adjustments, according to an embodiment.
**FIG. 10A** shows a block diagram of a system of a lane reduction determination system, according to one or more embodiments.
**FIG. 10B** shows a flowchart for a method for detecting lane reduction situations and transmitting a message to neighboring vehicles to avoid collisions.
**FIG. 10C** shows a block diagram of a non-transitory computer-readable medium to execute operations so as to detect lane reduction and transmit a message to neighboring vehicles to avoid collisions, according to an embodiment.
**FIG. 11A** shows example messages in Dedicated Short-Range Communications (DSRC) message format.
**FIG. 11B** shows an example message from the host vehicle to neighboring vehicles.
**FIG. 11C** shows an example message from the host vehicle to a neighboring vehicle.
**FIG. 11D** shows an example message from the neighboring vehicle to a host vehicle.
**FIG. 11E** shows an example alert message displayed in the host vehicle.
**FIG. 12A** shows a structure of the neural network / machine learning model with a feedback loop according to an embodiment.
**FIG. 12B** shows a structure of the neural network / machine learning model with reinforcement learning according to an embodiment.
**FIG. 12C** shows an example block diagram for detecting a collision event using a machine learning model according to an embodiment.
**FIG. 13** shows an example flow chart for detecting a collision event using a machine learning model according to an embodiment.
**FIG. 14** shows a block diagram of the cyber security module in view of the system and server.
**FIG. 14B** shows an embodiment of the cyber security module.
**FIG. 14C** shows another embodiment of the cyber security module.
Other features of the present embodiments will be apparent from the accompanying drawings and from the detailed description that follows.

### DETAILED DESCRIPTION

For simplicity and clarity of illustration, the figures illustrate the general manner of construction. The description and figures may omit the descriptions and details of well-known features and techniques to avoid unnecessarily obscuring the present disclosure. The figures exaggerate the dimensions of some of the elements relative to other elements to help improve understanding of embodiments of the present disclosure. The same reference numeral in different figures denotes the same element.

Although herein the detailed description contains many specifics for the purpose of illustration, a person of ordinary skill in the art will appreciate that many variations and alterations to the details are considered to be included herein.

Accordingly, the embodiments herein are without any loss of generality to, and without imposing limitations upon, any claims set forth. The terminology used herein is for the purpose of describing particular embodiments only and is not limiting. Unless defined otherwise, all technical and scientific terms used herein have the same meaning as commonly understood by one with ordinary skill in the art to which this disclosure belongs.

As used herein, the articles "a" and "an" used herein refer to one or to more than one (i.e., to at least one) of the grammatical object of the article. By way of example, "an element" means one element or more than one element. Moreover, usage of articles "a" and "an" in the subject specification and annexed drawings construe to mean "one or more" unless specified otherwise or clear from context to mean a singular form.

As used herein, the terms "example" and/or "exemplary" mean serving as an example, instance, or illustration. For the avoidance of doubt, such examples do not limit the herein described subject matter. In addition, any aspect or design described herein as an "example" and/or "exemplary" is not necessarily preferred or advantageous over other aspects or designs, nor does it preclude equivalent exemplary structures and techniques known to those of ordinary skill in the art.

As used herein, the terms "first," "second," "third," and the like in the description and in the claims, if any, distinguish between similar elements and do not necessarily describe a particular sequence or chronological order. The terms are interchangeable under appropriate circumstances such that the embodiments herein are, for example, capable of operation in sequences other than those illustrated or otherwise described herein. Furthermore, the terms "include," "have," and any variations thereof, cover a non-exclusive inclusion such that a process, method, system, article, device, or apparatus that comprises a list of elements is not necessarily limiting to those elements, but may include other elements not expressly listed or inherent to such process, method, system, article, device, or apparatus.

As used herein, the terms "left," "right," "front," "back," "top," "bottom," "over," "under" and the like in the description and in the claims, if any, are for descriptive purposes and not necessarily for describing permanent relative positions. The terms so used are interchangeable under appropriate circumstances such that the embodiments of the apparatus, methods, and/or articles of manufacture described herein are, for example, capable of operation in other orientations than those illustrated or otherwise described herein.

No element act, or instruction used herein is critical or essential unless explicitly described as such. Furthermore, the term "set" includes items (e.g., related items, unrelated items, a combination of related items and unrelated items, etc.) and may be interchangeable with "one or more". Where only one item is intended, the term "one" or similar language is used. Also, the terms "has," "have," "having," or the like are open-ended terms. Further, the phrase "based on" means "based, at least in part, on" unless explicitly stated otherwise.

As used herein, the terms "system," "device," "unit," and/or "module" refer to a different component, component portion, or component of the various levels of the order. However, other expressions that achieve the same purpose may replace the terms.

As used herein, the terms "couple," "coupled," "couples," "coupling," and the like refer to connecting two or more elements mechanically, electrically, and/or otherwise. Two or more electrical elements may be electrically coupled together, but not mechanically or otherwise coupled together. Coupling may be for any length of time, e.g., permanent, or semi-permanent or only for an instant. "Electrical coupling" includes electrical coupling of all types. The absence of the word "removably," "removable," and the like, near the word "coupled" and the like does not mean that the coupling, etc. in question is or is not removable.

As used herein, the term "or" means an inclusive "or" rather than an exclusive "or." That is, unless specified otherwise, or clear from context, "X employs A or B" means any of the natural inclusive permutations. That is, if X employs A; X employs B; or X employs both A and B, then "X employs A or B" is satisfied under any of the foregoing instances.

As used herein, two or more elements are "integral" if they comprise the same piece of material. Two or more elements are "non-integral" if each comprises a different piece of material.

As used herein, the term "real-time" refers to operations conducted as soon as practically possible upon occurrence of a triggering event. A triggering event can include receipt of data necessary to execute a task or to otherwise process information. Because of delays inherent in transmission and/or in computing speeds, the term "real-time" encompasses operations that occur in "near" real-time or somewhat delayed from a triggering event. In a number of embodiments, "real-time" can mean real-time less a time delay for processing (e.g., determining) and/or transmitting data. The particular time delay can vary depending on the type and/or amount of the data, the processing speeds of the hardware, the transmission capability of the communication hardware, the transmission distance, etc. However, in many embodiments, the time delay can be less than approximately one second, two seconds, five seconds, or ten seconds.

The present invention may be embodied in other specific forms without departing from its spirit or characteristics. The described embodiments are to be considered in all respects only as illustrative and not restrictive. The scope of the invention is, therefore, indicated by the appended claims rather than by the foregoing description. All variations which come within the meaning and range of equivalency of the claims are to be embraced within their scope.

As used herein, the term "approximately" can mean within a specified or unspecified range of the specified or unspecified stated value. In some embodiments, "approximately" can mean within plus or minus ten percent of the stated value. In other embodiments, "approximately" can mean within plus or minus five percent of the stated value. In further embodiments, "approximately" can mean within plus or minus three percent of the stated value. In yet other embodiments, "approximately" can mean within plus or minus one percent of the stated value.

Other specific forms may embody the present invention without departing from its spirit or characteristics. The described embodiments are in all respects illustrative and not restrictive. Therefore, the appended claims rather than the description herein indicate the scope of the invention. All variations which come within the meaning and range of equivalency of the claims are within their scope.

As used herein, the term "component" broadly construes hardware, firmware, and/or a combination of hardware, firmware, and software.

Digital electronic circuitry, or in computer software, firmware, or hardware, including the structures disclosed in this specification and their structural equivalents, or in combinations of one or more of them may realize the implementations and all of the functional operations described in this specification. Implementations may be as one or more computer program products i.e., one or more modules of computer program instructions encoded on a computer-readable medium for execution by, or to control the operation of, data processing apparatus. The computer-readable medium may be a machine-readable storage device, a machine-readable storage substrate, a memory device, a composition of matter affecting a machine-readable propagated signal, or a combination of one or more of them. The term "computing system" encompasses all apparatus, devices, and machines for processing data, including by way of example, a programmable processor, a computer, or multiple processors or computers. The apparatus may include, in addition to hardware, code that creates an execution environment for the computer program in question, e.g., code that constitutes processor firmware, a protocol stack, a database management system, an operating system, or a combination of one or more of them. A propagated signal is an artificially generated signal (e.g., a machine-generated electrical, optical, or electromagnetic signal) that encodes information for transmission to a suitable receiver apparatus.

The actual specialized control hardware or software code used to implement these systems and/or methods is not limiting to the implementations. Thus, any software and any hardware can implement the systems and/or methods based on the description herein without reference to specific software code.

A computer program (also known as a program, software, software application, script, or code) is written in any appropriate form of programming language, including compiled or interpreted languages. Any appropriate form, including a standalone program or a module, component, subroutine, or other unit suitable for use in a computing environment may deploy it. A computer program does not necessarily correspond to a file in a file system. A program may be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program may execute on one computer or on multiple computers that are located at one site or distributed across multiple sites and interconnected by a communication network.

One or more programmable processors, executing one or more computer programs to perform functions by operating on input data and generating output, perform the processes and logic flows described in this specification. The processes and logic flows may also be performed by, and apparatus may also be implemented as, special purpose logic circuitry, for example, without limitation, a Field Programmable Gate Array (FPGA), an Application Specific Integrated Circuit (ASIC), Application Specific Standard Products (ASSPs), System-On-a-Chip (SOC) systems, Complex Programmable Logic Devices (CPLDs), etc.

Processors suitable for the execution of a computer program include, by way of example, both general and special purpose microprocessors, and any one or more processors of any appropriate kind of a digital computer. A processor will receive instructions and data from a read-only memory or a random-access memory or both. Elements of a computer can include a processor for performing instructions and one or more memory devices for storing instructions and data. A computer will also include, or is operatively coupled to receive data, transfer data or both, to/from one or more mass storage devices for storing data e.g., magnetic disks, magneto optical disks, optical disks, or solid-state disks. However, a computer need not have such devices. Moreover, another device, e.g., a mobile telephone, a personal digital assistant (PDA), a mobile audio player, a Global Positioning System (GPS) receiver, etc. may embed a computer. Computer-readable media suitable for storing computer program instructions and data include all forms of non-volatile memory, media and memory devices, including, by way of example, semiconductor memory devices (e.g., Erasable Programmable Read-Only Memory (EPROM), Electronically Erasable Programmable Read-Only Memory (EEPROM), and flash memory devices), magnetic disks (e.g., internal hard disks or removable disks), magneto optical disks (e.g. Compact Disc Read-Only Memory (CD ROM) disks, Digital Versatile Disk-Read-Only Memory (DVD-ROM) disks) and solid-state disks. Special purpose logic circuitry may supplement or incorporate the processor and the memory.

To provide for interaction with a user, a computer may have a display device, e.g., a Cathode Ray Tube (CRT) or Liquid Crystal Display (LCD) monitor, for displaying information to the user, and a keyboard and a pointing device, e.g., a mouse or a trackball, by which the user may provide input to the computer. Other kinds of devices provide for interaction with a user as well. For example, feedback to the user may be any appropriate form of sensory feedback, e.g., visual feedback, auditory feedback, or tactile feedback; and a computer may receive input from the user in any appropriate form, including acoustic, speech, or tactile input.

A computing system that includes a back-end component, e.g., a data server, or that includes a middleware component, e.g., an application server, or that includes a front-end component, e.g., a client computer having a graphical user interface or a Web browser through which a user may interact with an implementation, or any appropriate combination of one or more such back-end, middleware, or front-end components, may realize implementations described herein. Any appropriate form or medium of digital data communication, e.g., a communication network may interconnect the components of the system. Examples of communication networks include a Local Area Network (LAN) and a Wide Area Network (WAN), e.g., Intranet and Internet.

The computing system may include clients and servers. A client and server are remote from each other and typically interact through a communication network. The relationship of the client and server arises by virtue of computer programs running on the respective computers and having a client-server relationship to each other.

Embodiments of the present invention may comprise or utilize a special purpose or general-purpose computer including computer hardware. Embodiments within the scope of the present invention may also include physical and other computer-readable media for carrying or storing computer-executable instructions and/or data structures. Such computer-readable media can be any media accessible by a general purpose or special purpose computer system. Computer-readable media that store computer-executable instructions are physical storage media. Computer-readable media that carry computer-executable instructions are transmission media. Thus, by way of example and not limitation, embodiments of the invention can comprise at least two distinct kinds of computer-readable media: physical computer-readable storage media and transmission computer-readable media.

Although the present embodiments described herein are with reference to specific example embodiments it will be evident that various modifications and changes may be made to these embodiments without departing from the broader spirit and scope of the various embodiments. For example, hardware circuitry (e.g., Complementary Metal Oxide Semiconductor (CMOS) based logic circuitry), firmware, software (e.g., embodied in a non-transitory machine-readable medium), or any combination of hardware, firmware, and software may enable and operate the various devices, units, and modules described herein. For example, transistors, logic gates, and electrical circuits (e.g., Application Specific Integrated Circuit (ASIC) and/or Digital Signal Processor (DSP) circuit) may embody the various electrical structures and methods.

In addition, a non-transitory machine-readable medium and/or a system may embody the various operations, processes, and methods disclosed herein. Accordingly, the specification and drawings are illustrative rather than restrictive.

Physical computer-readable storage media includes RAM, ROM, EEPROM, CD-ROM or other optical disk storage (such as CDs, DVDs, etc.), magnetic disk storage or other magnetic storage devices, solid-state disks or any other medium. They store desired program code in the form of computer-executable instructions or data structures which can be accessed by a general purpose or special purpose computer.

As used herein, the term "network" refers to one or more data links that enable the transport of electronic data between computer systems and/or modules and/or other electronic devices. When a network or another communications connection (either hardwired, wireless, or a combination of hardwired or wireless) transfers or provides information to a computer, the computer properly views the connection as a transmission medium. A general purpose or special purpose computer access transmission media that can include a network and / or data links which carry desired program code in the form of computer-executable instructions or data structures. The scope of computer-readable media includes combinations of the above, that enable the transport of electronic data between computer systems and/or modules and/or other electronic devices.

Further, upon reaching various computer system components, program code in the form of computer-executable instructions or data structures can be transferred automatically from transmission computer-readable media to physical computer-readable storage media (or vice versa). For example, computer-executable instructions or data structures received over a network or data link can be buffered in RAM within a Network Interface Module (NIC), and then eventually transferred to computer system RAM and/or to less volatile computer-readable physical storage media at a computer system. Thus, computer system components that also (or even primarily) utilize transmission media may include computer-readable physical storage media.

Computer-executable instructions comprise, for example, instructions and data which cause a general-purpose computer, special purpose computer, or special purpose processing device to perform a certain function or group of functions. The computer-executable instructions may be, for example, binary, intermediate format instructions such as assembly language, or even source code. Although the subject matter herein described is in a language specific to structural features and/or methodological acts, the described features or acts described do not limit the subject matter defined in the claims. Rather, the herein described features and acts are example forms of implementing the claims.

While this specification contains many specifics, these do not construe as limitations on the scope of the disclosure or of the claims, but as descriptions of features specific to particular implementations. A single implementation may implement certain features described in this specification in the context of separate implementations. Conversely, multiple implementations separately or in any suitable sub-combination may implement various features described herein in the context of a single implementation. Moreover, although features described herein as acting in certain combinations and even initially claimed as such, one or more features from a claimed combination may in some cases be excised from the combination, and the claimed combination may be directed to a sub-combination or variation of a sub-combination.

Similarly, while operations depicted herein in the drawings in a particular order to achieve desired results, this should not be understood as requiring that such operations be performed in the particular order shown or in sequential order or that all illustrated operations be performed, to achieve desirable results. In certain circumstances, multitasking and parallel processing may be advantageous. Moreover, the separation of various system components in the implementations should not be understood as requiring such separation in all implementations, and it should be understood that the described program components and systems may be integrated together in a single software product or packaged into multiple software products.

Even though particular combinations of features are recited in the claims and/or disclosed in the specification, these combinations are not intended to limit the disclosure of possible implementations. Other implementations are within the scope of the claims. For example, the actions recited in the claims may be performed in a different order and still achieve desirable results. In fact, many of these features may be combined in ways not specifically recited in the claims and/or disclosed in the specification. Although each dependent claim may directly depend on only one claim, the disclosure of possible implementations includes each dependent claim in combination with every other claim in the claim set.

Further, a computer system including one or more processors and computer-readable media such as computer memory may practice the methods. In particular, one or more processors execute computer-executable instructions, stored in the computer memory, to perform various functions such as the acts recited in the embodiments.

Those skilled in the art will appreciate that the invention may be practiced in network computing environments with many types of computer system configurations including personal computers, desktop computers, laptop computers, message processors, hand-held devices, multiprocessor systems, microprocessor-based or programmable consumer electronics, network PCs, minicomputers, mainframe computers, mobile telephones, PDAs, pagers, routers, switches, etc. Distributed system environments where local and remote computer systems, which are linked (either by hardwired data links, wireless data links, or by a combination of hardwired and wireless data links) through a network, both perform tasks may also practice the invention. In a distributed system environment, program modules may be located in both local and remote memory storage devices.

The following terms and phrases, unless otherwise indicated, shall be understood to have the following meanings.

As used herein, the term "lane reduction" or "road diet" or "road re-channelization" or "road conversion" is a technique in transportation planning whereby the number of travel lanes and/or effective width of the road is reduced in order to achieve systemic improvements.

As used herein, the term "nearest disappearing lane" is a neighboring lane that is blocked completely or merged into another lane by reduction of lane width.

The term "vehicle" as used herein refers to a thing used for transporting people or goods. Automobiles, cars, trucks, buses etc. are examples of vehicles.

As used herein, the term "host vehicle" refers to a vehicle comprising an embodiment of the system described herein.

The term "nearby vehicle" or "neighboring vehicle" as used herein refers to surrounding vehicles of the user's vehicle and is within reach of at least a communication range of the user's vehicle wherein the communication range is defined as the maximum distance where communication can exist between two antennas, one of which is user's vehicle antenna in a wireless network.

As used herein, the term "a point of lane disappearance " refers to a point on the lane from where lane reduction starts. It refers to a point from where the lane width starts decreasing gradually.

As used herein "Machine learning" refers to algorithms that give a computer the ability to learn without explicit programming, including algorithms that learn from and make predictions about data. Machine learning techniques include, but are not limited to, support vector machine, artificial neural network (ANN) (also referred to herein as a "neural net"), deep learning neural network, logistic regression, discriminant analysis, random forest, linear regression, rules-based machine learning, Naive Bayes, nearest neighbor, decision tree, decision tree learning, and hidden Markov, etc. For the purposes of clarity, part of a machine learning process can use algorithms such as linear regression or logistic regression. However, using linear regression or another algorithm as part of a machine learning process is distinct from performing a statistical analysis such as regression with a spreadsheet program. The machine learning process can continually learn and adjust the classifier as new data becomes available and does not rely on explicit or rules-based programming. The ANN may be featured with a feedback loop to adjust the system output dynamically as it learns from the new data as it becomes available. In machine learning, backpropagation and feedback loops are used to train the artificial intelligence/ machine learning (AI/ML) model improving the model's accuracy and performance over time.

Statistical modeling relies on finding relationships between variables (e.g., mathematical equations) to predict an outcome.

As used herein, the term "Data mining" is a process used to turn raw data into useful information.

As used herein, the term "Data acquisition" is the process of sampling signals that measure real world physical conditions and converting the resulting samples into digital numeric values that a computer manipulates. Data acquisition systems typically convert analog waveforms into digital values for processing. The components of data acquisition systems include sensors to convert physical parameters to electrical signals, signal conditioning circuitry to convert sensor signals into a form that can be converted to digital values, and analog-to-digital converters to convert conditioned sensor signals to digital values. Stand-alone data acquisition systems are often called data loggers.

As used herein, the term "Dashboard" is a type of interface that visualizes particular Key Performance Indicators (KPIs) for a specific goal or process. It is based on data visualization and infographics.

As used herein, a "Database" is a collection of organized information so that it can be easily accessed, managed, and updated. Computer databases typically contain aggregations of data records or files.

As used herein, the term "Data set" (or "Dataset") is a collection of data. In the case of tabular data, a data set corresponds to one or more database tables, where every column of a table represents a particular variable, and each row corresponds to a given record of the data set in question. The data set lists values for each of the variables, such as height and weight of an object, for each member of the data set. Each value is known as a datum. Data sets can also consist of a collection of documents or files.

As used herein, a "Sensor" is a device that measures physical input from its environment and converts it into data that is interpretable by either a human or a machine. Most sensors are electronic, which presents electronic data, but some are simpler, such as a glass thermometer, which presents visual data.

The term "electronic control unit" (ECU), also known as an "electronic control module" (ECM), is a module that controls one or more subsystems. Herein, an ECU may be installed in a car or other motor vehicle. It may refer to many ECUs, and can include but not limited to, Engine Control Module (ECM), Powertrain Control Module (PCM), Transmission Control Module (TCM), Brake Control Module (BCM) or Electronic Brake Control Module (EBCM), Central Control Module (CCM), Central Timing Module (CTM), General Electronic Module (GEM), Body Control Module (BCM), and Suspension Control Module (SCM). ECUs together are sometimes referred to collectively as the vehicles' computer or vehicles' central computer and may include separate computers. In an example, the electronic control unit can be an embedded system in automotive electronics. In another example, the electronic control unit is wirelessly coupled with the automotive electronics.

The term "infotainment system" or "in-vehicle infotainment system" (IVI) as used herein refers to a combination of vehicle systems which are used to deliver entertainment and information. In an example, the information may be delivered to the driver and the passengers of a vehicle/occupants through audio/ video interfaces, control elements like touch screen displays, button panel, voice commands, and more. Some of the main components of an in-vehicle infotainment systems are integrated head-unit, heads-up display, high-end Digital Signal Processors (DSPs), and Graphics Processing Units (GPUs) to support multiple displays, operating systems, Controller Area Network (CAN), Low-Voltage Differential Signaling (LVDS), and other network protocol support (as per the requirement), connectivity modules, automotive sensors integration, digital instrument cluster, etc.

The term "environment" or "surrounding" as used herein refers to surroundings and the space in which a vehicle is navigating. It refers to dynamic surroundings in which a vehicle is navigating which includes other vehicles, obstacles, pedestrians, lane boundaries, traffic signs and signals, speed limits, potholes, snow, water logging, etc.

The term "autonomous mode" as used herein refers to an operating mode which is independent and unsupervised.

The term "manual mode" as used herein refers to a mode of operation where the vehicle's driving controls are handed over to the human driver, allowing them to drive the vehicle manually.

The term "autonomous communication" as used herein comprises communication over a period with minimal supervision under different scenarios and is not solely or completely based on pre-coded scenarios or pre-coded rules or a predefined protocol. Autonomous communication, in general, happens in an independent and an unsupervised manner. In an embodiment, a communication module is enabled for autonomous communication.

The term "autonomous vehicle" also referred to as self-driving vehicle, driverless vehicle, robotic vehicle as used herein refers to a vehicle incorporating vehicular automation, that is, a ground vehicle that can sense its environment and move safely with little or no human input. Self-driving vehicles combine a variety of sensors to perceive their surroundings, such as thermographic cameras, Radio Detection and Ranging (radar), Light Detection and Ranging (lidar), Sound Navigation and Ranging (sonar), Global Positioning System (GPS), odometry and inertial measurement unit. Control systems, designed for the purpose, interpret sensor information to identify appropriate navigation paths, as well as obstacles and relevant signage.

The term "communication system" or "communication module" as used herein refers to a system which enables the information exchange between two points. The process of transmission and reception of information is called communication. The major elements of communication include but are not limited to a transmitter of information, channel or medium of communication and a receiver of information.

The term "connection" as used herein refers to a communication link. It refers to a communication channel that connects two or more devices for the purpose of data transmission. It may refer to a physical transmission medium such as a wire, or to a logical connection over a multiplexed medium such as a radio channel in telecommunications and computer networking. A channel is used for the information transfer of, for example, a digital bit stream, from one or several senders to one or several receivers. A channel has a certain capacity for transmitting information, often measured by its bandwidth in Hertz (Hz) or its data rate in bits per second. For example, a Vehicle-to-Vehicle (V2V) communication may wirelessly exchange information about the speed, location and heading of surrounding vehicles.

The term "communication" as used herein refers to the transmission of information and/or data from one point to another. Communication may be by means of electromagnetic waves. It is also a flow of information from one point, known as the source, to another, the receiver. Communication comprises one of the following: transmitting data, instructions, and information or a combination of data, instructions, and information. Communication happens between any two communication systems or communicating units. The term "in communication with" may refer to any coupling, connection, or interaction using electrical signals to exchange information or data, using any system, hardware, software, protocol, or format, regardless of whether the exchange occurs wirelessly or over a wired connection. The term communication includes systems that combine other more specific types of communication, such as V2I (Vehicle-to-Infrastructure), V2I (Vehicle-to-Infrastructure), V2N (Vehicle-to-Network), V2V (Vehicle-to-Vehicle), V2P (Vehicle-to-Pedestrian), V2D (Vehicle-to-Device) and V2G (Vehicle-to-Grid) and Vehicle-to-Everything (V2X) communication. V2X communication is the transmission of information from a vehicle to any entity that may affect the vehicle, and vice versa. The main motivations for developing V2X are occupant safety, road safety, traffic efficiency and energy efficiency. Depending on the underlying technology employed, there are two types of V2X communication technologies: cellular networks and other technologies that support direct device-to-device communication (such as Dedicated Short-Range Communication (DSRC), Port Community System (PCS), Bluetooth^{®}, Wi-Fi^{®}, etc.). Further, the emergency communication apparatus is configured on a computer with the communication function and is connected for bidirectional communication with the on-vehicle emergency report apparatus by a communication line through a radio station and a communication network such as a public telephone network or by satellite communication through a communication satellite. The emergency communication apparatus is adapted to communicate, through the communication network, with communication terminals including a road management office, a police station, a fire department, and a hospital. The emergency communication apparatus can be also connected online with the communication terminals of the persons concerned, associated with the occupant (the driver receiving the service) of the emergency-reporting vehicle.

The term "vehicle to vehicle (V2V) communication" refers to the technology that allows vehicles to broadcast and receive messages. The messages may be omni-directional messages, creating a 360-degree "awareness" of other vehicles in proximity. Vehicles may be equipped with appropriate software (or safety applications) that can use the messages from surrounding vehicles to determine potential crash threats as they develop.

The term "alert" or "alert signal" refers to a communication to attract attention. An alert may include visual, tactile, audible alert, and a combination of these alerts to warn drivers or occupants. These alerts allow drivers or occupants the ability to react and respond quickly.

The term "occupant" as used herein, refers to a passenger in the vehicle and it includes the driver. Passenger and occupant are used interchangeably and refer to a person in the vehicle during a ride.

The term "computer vision system" allows the vehicle to "see" and interpret the world around it. This system uses a combination of cameras, sensors, and other technologies such as LIDAR, RADAR, GPS, Machine learning algorithms, etc., to collect visual data about the vehicle's surroundings and analyse that data in real-time. The computer vision system is designed to perform a range of tasks, including object detection, lane detection, and pedestrian recognition. It uses deep learning algorithms and other machine learning techniques to analyse the visual data and make decisions about how to control the vehicle. For example, the computer vision system may use object detection algorithms to identify other vehicles, pedestrians, and obstacles in the vehicle's path. It can then use this information to determine the vehicle's speed and direction, adjust its trajectory to avoid collisions, and apply the brakes or accelerate as needed. It allows the vehicle to navigate safely and efficiently in a variety of driving conditions.

The term "deterministic motion model" is a mathematical description of the movement of an object or system that is fully determined by its initial state and inputs. This means that, given the starting position, velocity, and other relevant parameters of a system, and the inputs it receives (such as forces or torques), the model can accurately predict its future position, velocity, and other states at any point in time. A deterministic motion model can be used to simulate the behavior of a mechanical system, such as a vehicle, to understand, plan, and optimize its movements, or to control its motion in real-time. Such models are typically based on physical principles such as Newton's laws of motion and may also consider environmental factors such as friction, gravity, surface conditions, or wind resistance. Overall, the goal of a deterministic motion model is to provide a reliable and accurate way to predict the behavior of a system.

As used herein, the term "Subcompact vehicle" refers to a vehicle typically weighing less than 2,500 pounds and having a length of around 10 feet or less.

As used herein, the term "Compact vehicle" refers to slightly larger than subcompact vehicle, with a weight between 2,500 and 3,500 pounds and a length of around 14 feet or less.

As used herein, the term "Midsize vehicle" refers to a larger than compact vehicle, with a weight between 3,500 and 4,500 pounds and a length of around 15 to 18 feet.

As used herein, the term "Full-size vehicle" refers to a larger than midsize vehicle, with a weight between 4,500 and 5,500 pounds and a length of around 18 to 20 feet.

As used herein, the term "Sport Utility Vehicles" refers to a vehicle typically larger than compact vehicles, with a weight between 4,500 and 7,000 pounds and a length of around 15 to 25 feet. They are designed to be used on and off the road and have high ground clearance.

As used herein, the term "Truck" refers to vehicles that are designed to carry cargo, and their size can vary widely depending on their intended use. Light-duty trucks weigh between 6,000 and 10,000 pounds, medium-duty trucks weigh between 10,000 and 26,000 pounds, and heavy-duty trucks weigh over 26,000 pounds.

As used herein, the term "Bus" refers to a vehicle designed to carry multiple passengers, and their size can vary widely depending on the type of bus. School buses are typically between 23 and 40 feet long and weigh between 10,000 and 36,000 pounds. Transit buses can be up to 45 feet long and weigh up to 44,000 pounds or more.

As used herein, the term "Cones" refers to traffic diversion markers that are cone shaped. They come in many different colors, with orange, yellow, pink, and red being the most common colors due to their brightness. Some traffic cones are green and blue. Some traffic cones may also have a retroreflective strip (commonly known as "flash tape") to increase their visibility. used to mark off areas where work is being done or where traffic needs to be redirected.

As used herein, the term "Barricades" refers to traffic diversion markers that are larger traffic markers that are often used to block off entire sections of roadways or footpaths. They are typically made of plastic or metal and can be arranged in various configurations to create a barrier.

As used herein, the term "Jersey barriers" refers to traffic diversion markers that are large concrete or plastic barriers that are used to separate traffic or block off certain areas. They are often used in construction zones or to protect buildings and other structures.

As used herein, the term "Traffic barrels" refers to traffic diversion markers that are similar to traffic cones but are larger and more visible. They are often used to create a temporary lane shift or to block off areas where work is being done.

As used herein, the term "Portable traffic signals" refers to traffic diversion markers that are used to control traffic at intersections or other areas where traffic needs to be redirected. They are typically powered by batteries and can be set up and taken down quickly.

As used herein, the term "Temporary pavement markings" refers to traffic diversion markers such as tape, paint, or other materials to mark off areas where traffic needs to be redirected. They are often used in construction zones or to mark off areas for special events.

As used herein, the term "Flaggers" refers to people who are trained to direct traffic using hand signals, flags, or other means. They are often used in construction zones or other areas where traffic needs to be redirected.

As used herein, the term "traffic control processor" is a computer system that is used to manage and control traffic flow. It provides real-time traffic information, such as traffic conditions, road closures, and accidents to the vehicles system or/and the occupant. This information can be displayed on variable message signs, mobile apps, or other communication channels."

The term "application server" refers to a server that hosts applications or software that delivers a business application through a communication protocol. An application server framework is a service layer model. It includes software components available to a software developer through an application programming interface. It is system software that resides between the operating system (OS) on one side, the external resources such as a database management system (DBMS), communications and Internet services on another side, and the users' applications on the third side.

The term "cyber security" as used herein refers to application of technologies, processes, and controls to protect systems, networks, programs, devices, and data from cyber-attacks.

The term "cyber security module" as used herein refers to a module comprising application of technologies, processes, and controls to protect systems, networks, programs, devices and data from cyber-attacks and threats. It aims to reduce the risk of cyber-attacks and protect against the unauthorized exploitation of systems, networks, and technologies. It includes, but is not limited to, critical infrastructure security, application security, network security, cloud security, Internet of Things (IoT) security.

The term "encrypt" used herein refers to securing digital data using one or more mathematical techniques, along with a password or "key" used to decrypt the information. It refers to converting information or data into a code, especially to prevent unauthorized access. It may also refer to concealing information or data by converting it into a code. It may also be referred to as cipher, code, encipher, encode. A simple example is representing alphabets with numbers - say, 'A' is '01', 'B' is '02', and so on. For example, a message like "HELLO" will be encrypted as "0805121215," and this value will be transmitted over the network to the recipient(s).

The term "decrypt" used herein refers to the process of converting an encrypted message back to its original format. It is generally a reverse process of encryption. It decodes the encrypted information so that only an authorized user can decrypt the data because decryption requires a secret key or password. This term could be used to describe a method of unencrypting the data manually or unencrypting the data using the proper codes or keys.

The term "cyber security threat" used herein refers to any possible malicious attack that seeks to unlawfully access data, disrupt digital operations, or damage information. A malicious act includes but is not limited to damaging data, stealing data, or disrupting digital life in general. Cyber threats include, but are not limited to, malware, spyware, phishing attacks, ransomware, zero-day exploits, trojans, advanced persistent threats, wiper attacks, data manipulation, data destruction, rogue software, malvertising, unpatched software, computer viruses, man-in-the-middle attacks, data breaches, Denial of Service (DoS) attacks, and other attack vectors.

The term "hash value" used herein can be thought of as fingerprints for files. The contents of a file are processed through a cryptographic algorithm, and a unique numerical value, the hash value, is produced that identifies the contents of the file. If the contents are modified in any way, the value of the hash will also change significantly. Example algorithms used to produce hash values: the Message Digest-5 (MD5) algorithm and Secure Hash Algorithm-1 (SHA1).

The term "integrity check" as used herein refers to the checking for accuracy and consistency of system related files, data, etc. It may be performed using checking tools that can detect whether any critical system files have been changed, thus enabling the system administrator to look for unauthorized alteration of the system. For example, data integrity corresponds to the quality of data in the databases and to the level by which users examine data quality, integrity, and reliability. Data integrity checks verify that the data in the database is accurate, and functions as expected within a given application.

The term "alarm" as used herein refers to a trigger when a component in a system or the system fails or does not perform as expected. The system may enter an alarm state when a certain event occurs. An alarm indication signal is a visual signal to indicate the alarm state. For example, when a cyber security threat is detected, a system administrator may be alerted via sound alarm, a message, a glowing LED, a pop-up window, etc. Alarm indication signal may be reported downstream from a detecting device, to prevent adverse situations or cascading effects.

The term "in communication with" as used herein, refers to any coupling, connection, or interaction using electrical signals to exchange information or data, using any system, hardware, software, protocol, or format, regardless of whether the exchange occurs wirelessly or over a wired connection.

As used herein, the term "cryptographic protocol" is also known as security protocol or encryption protocol. It is an abstract or concrete protocol that performs a security-related function and applies cryptographic methods often as sequences of cryptographic primitives. A protocol describes how the algorithms should be used. A sufficiently detailed protocol includes details about data structures and representations, at which point it can be used to implement multiple, interoperable versions of a program. Cryptographic protocols are widely used for secure application-level data transport. A cryptographic protocol usually incorporates at least some of these aspects: key agreement or establishment, entity authentication, symmetric encryption, and message authentication material construction, secured application-level data transport, non-repudiation methods, secret sharing methods, and secure multi-party computation. Hashing algorithms may be used to verify the integrity of data. Secure Socket Layer (SSL) and Transport Layer Security (TLS), the successor to SSL, are cryptographic protocols that may be used by networking switches to secure data communications over a network.

As used herein, the term "network" may include the Internet, a local area network, a wide area network, or combinations thereof. The network may include one or more networks or communication systems, such as the Internet, the telephone system, satellite networks, cable television networks, and various other private and public networks. In addition, the connections may include wired connections (such as wires, cables, fiber optic lines, etc.), wireless connections, or combinations thereof. Furthermore, although not shown, other computers, systems, devices, and networks may also be connected to the network. Network refers to any set of devices or subsystems connected by links joining (directly or indirectly) a set of terminal nodes sharing resources located on or provided by network nodes. The computers use common communication protocols over digital interconnections to communicate with each other. For example, subsystems may comprise the cloud. Cloud refers to servers that are accessed over the Internet, and the software and databases that run on those servers.

The embodiments described herein can be directed to one or more of a system, a method, an apparatus, and/or a computer program product at any possible technical detail level of integration. The computer program product can include a computer readable storage medium (or media) having computer readable program instructions thereon for causing a processor to carry out aspects of the one or more embodiments described herein. The computer readable storage medium can be a tangible device that can retain and store instructions for use by an instruction execution device. For example, the computer readable storage medium can be, but is not limited to, an electronic storage device, a magnetic storage device, an optical storage device, an electromagnetic storage device, a superconducting storage device, and/or any suitable combination of the foregoing. A non-exhaustive list of more specific examples of the computer readable storage medium can also include the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon and/or any suitable combination of the foregoing. A computer readable storage medium, as used herein, does not construe transitory signals per se, such as radio waves and/or other freely propagating electromagnetic waves, electromagnetic waves propagating through a waveguide and/or other transmission media (e.g., light pulses passing through a fiber-optic cable), and/or electrical signals transmitted through a wire.

Computer readable program instructions described herein are downloadable to respective computing/processing devices from a computer readable storage medium and/or to an external computer or external storage device via a network, for example, the Internet, a local area network, a wide area network and/or a wireless network. The network can comprise copper transmission cables, optical transmission fibers, wireless transmission, routers, firewalls, switches, gateway computers, and/or edge servers. A network adapter card or network interface in each computing/processing device receives computer readable program instructions from the network and forwards the computer readable program instructions for storage in a computer readable storage medium within the respective computing/processing device. Computer readable program instructions for carrying out operations of the one or more embodiments described herein can be assembler instructions, instruction-set-architecture (ISA) instructions, machine instructions, machine dependent instructions, microcode, firmware instructions, state-setting data, configuration data for integrated circuitry, and/or source code and/or object code written in any combination of one or more programming languages, including an object oriented programming language such as Smalltalk, C++ or the like, and/or procedural programming languages, such as the "C" programming language and/or similar programming languages. The computer readable program instructions can execute entirely on a computer, partly on a computer, as a stand-alone software package, partly on a computer and/or partly on a remote computer or entirely on the remote computer and/or server. In the latter scenario, the remote computer can be connected to a computer through any type of network, including a local area network (LAN) and/or a wide area network (WAN), and/or the connection can be made to an external computer (for example, through the Internet using an Internet Service Provider). In one or more embodiments, electronic circuitry including, for example, programmable logic circuitry, field-programmable gate arrays (FPGA), and/or programmable logic arrays (PLA) can execute the computer readable program instructions by utilizing state information of the computer readable program instructions to personalize the electronic circuitry, in order to perform aspects of the one or more embodiments described herein.

Aspects of the one or more embodiments described herein are described with reference to flowchart illustrations and/or block diagrams of methods, apparatus (systems), and computer program products according to one or more embodiments described herein. Each block of the flowchart illustrations and/or block diagrams, and combinations of blocks in the flowchart illustrations and/or block diagrams, can be implemented by computer readable program instructions. These computer readable program instructions can be provided to a processor of a general-purpose computer, special purpose computer and/or other programmable data processing apparatus to produce a machine, such that the instructions, which execute via the processor of the computer or other programmable data processing apparatus, can create means for implementing the functions/acts specified in the flowchart and/or block diagram block or blocks. These computer readable program instructions can also be stored in a computer readable storage medium that can direct a computer, a programmable data processing apparatus and/or other devices to function in a particular manner, such that the computer readable storage medium having instructions stored therein can comprise an article of manufacture including instructions which can implement aspects of the function/act specified in the flowchart and/or block diagram block or blocks. The computer readable program instructions can also be loaded onto a computer, other programmable data processing apparatus and/or other device to cause a series of operational acts to be performed on the computer, other programmable apparatus and/or other device to produce a computer implemented process, such that the instructions which execute on the computer, other programmable apparatus and/or other device implement the functions/acts specified in the flowchart and/or block diagram block or blocks.

The flowcharts and block diagrams in the figures illustrate the architecture, functionality and/or operation of possible implementations of systems, computer-implementable methods and/or computer program products according to one or more embodiments described herein. In this regard, each block in the flowchart or block diagrams can represent a module, segment and/or portion of instructions, which comprises one or more executable instructions for implementing the specified logical function(s). In one or more alternative implementations, the functions noted in the blocks can occur out of the order noted in the Figures. For example, two blocks shown in succession can be executed substantially concurrently, and/or the blocks can sometimes be executed in the reverse order, depending upon the functionality involved. It will also be noted that each block of the block diagrams and/or flowchart illustration, and/or combinations of blocks in the block diagrams and/or flowchart illustration, can be implemented by special purpose hardware-based systems that can perform the specified functions and/or acts and/or carry out one or more combinations of special purpose hardware and/or computer instructions.

While the subject matter described herein is in the general context of computer-executable instructions of a computer program product that runs on a computer and/or computers, those skilled in the art will recognize that the one or more embodiments herein also can be implemented in combination with one or more other program modules. Program modules include routines, programs, components, data structures, and/or the like that perform particular tasks and/or implement particular abstract data types. Moreover, other computer system configurations, including single-processor and/or multiprocessor computer systems, mini-computing devices, mainframe computers, as well as computers, hand-held computing devices (e.g., PDA, phone), microprocessor-based or programmable consumer and/or industrial electronics and/or the like can practice the herein described computer-implemented methods. Distributed computing environments, in which remote processing devices linked through a communications network perform tasks, can also practice the illustrated aspects. However, stand-alone computers can practice one or more, if not all aspects of the one or more embodiments described herein. In a distributed computing environment, program modules can be located in both local and remote memory storage devices.

As used in this application, the terms "component," "system," "platform," "interface," and/or the like, can refer to and/or can include a computer-related entity or an entity related to an operational machine with one or more specific functionalities. The entities described herein can be either hardware, a combination of hardware and software, software, or software in execution. For example, a component can be, but is not limited to being, a process running on a processor, a processor, an object, an executable, a thread of execution, a program and/or a computer. By way of illustration, both an application running on a server and the server can be a component. One or more components can reside within a process and/or thread of execution and a component can be localized on one computer and/or distributed between two or more computers. In another example, respective components can execute from various computer readable media having various data structures stored thereon. The components can communicate via local and/or remote processes such as in accordance with a signal having one or more data packets (e.g., data from one component interacting with another component in a local system, distributed system and/or across a network such as the Internet with other systems via the signal). As another example, a component can be an apparatus with specific functionality provided by mechanical parts operated by electric or electronic circuitry, which is operated by a software and/or firmware application executed by a processor. In such a case, the processor can be internal and/or external to the apparatus and can execute at least a part of the software and/or firmware application. As yet another example, a component can be an apparatus that provides specific functionality through electronic components without mechanical parts, where the electronic components can include a processor and/or other means to execute software and/or firmware that confers at least in part the functionality of the electronic components. In an aspect, a component can emulate an electronic component via a virtual machine, e.g., within a cloud computing system.

As it is employed in the subject specification, the term "processor" can refer to any computing processing unit and/or device comprising, but not limited to, single-core processors; single-processors with software multithread execution capability; multi-core processors; multi-core processors with software multithread execution capability; multi-core processors with hardware multithread technology; parallel platforms; and/or parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, and/or any combination thereof designed to perform the functions described herein. Further, processors can exploit nano-scale architectures such as, but not limited to, molecular based transistors, switches and/or gates, in order to optimize space usage and/or to enhance performance of related equipment. A combination of computing processing units can implement a processor.

Herein, terms such as "store," "storage," "data store," data storage," "database," and any other information storage component relevant to operation and functionality of a component refer to "memory components," entities embodied in a "memory," or components comprising a memory. Memory and/or memory components described herein can be either volatile memory or nonvolatile memory or can include both volatile and nonvolatile memory. By way of illustration, and not limitation, nonvolatile memory can include read only memory (ROM), programmable ROM (PROM), electrically programmable ROM (EPROM), electrically erasable ROM (EEPROM), flash memory, and/or nonvolatile random-access memory (RAM) (e.g., ferroelectric RAM (FeRAM). Volatile memory can include RAM, which can function as external cache memory, for example. By way of illustration and not limitation, RAM can be available in many forms such as synchronous RAM (SRAM), dynamic RAM (DRAM), synchronous DRAM (SDRAM), double data rate SDRAM (DDR SDRAM), enhanced SDRAM (ESDRAM), Synch link DRAM (SLDRAM), direct Rambus RAM (DRRAM), direct Rambus dynamic RAM (DRDRAM) and/or Rambus dynamic RAM (RDRAM). Additionally, the described memory components of systems and/or computer-implemented methods herein include, without being limited to including, these and/or any other suitable types of memory.

The embodiments described herein include mere examples of systems and computer-implemented methods. It is, of course, not possible to describe every conceivable combination of components and/or computer-implemented methods for purposes of describing the one or more embodiments, but one of ordinary skill in the art can recognize that many further combinations and/or permutations of the one or more embodiments are possible. Furthermore, to the extent that the terms "includes," "has," "possesses," and the like are used in the detailed description, claims, appendices and/or drawings such terms are intended to be inclusive in a manner similar to the term "comprising" as "comprising" is interpreted when employed as a transitional word in a claim.

The descriptions of the one or more embodiments are for purposes of illustration but are not exhaustive or limiting to the embodiments described herein. Many modifications and variations will be apparent to those of ordinary skill in the art without departing from the scope and spirit of the described embodiments. The terminology used herein best explains the principles of the embodiments, the practical application and/or technical improvement over technologies found in the marketplace, and/or to enable others of ordinary skill in the art to understand the embodiments described herein.

Provided are embodiments related to systems and methods for taking automatic actions by a vehicle when another vehicle swerves into its lane, which could happen for various reasons like detecting an issue in the lane ahead or realizing they are in the wrong lane for an exit. Slamming the brakes immediately may cause accidents from the rear or running into the sidewalk or other obstacles. The vehicle needs to make decisions based on its surroundings, and early prediction is crucial. The vehicle comprising the system's senses becomes heightened when it senses a fast-moving neighboring vehicle, and it can adjust and slow down to let the neighboring vehicle go by. The vehicle can anticipate the neighboring vehicle's intentions based on its mapping and adjust its speed accordingly.

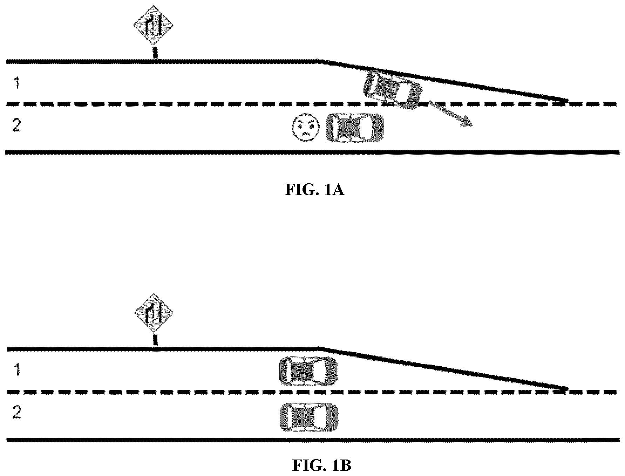

Referring to **FIG. 1A****,** some drivers are distracted, and they notice too late that lane 1 is disappearing, a) As soon as they realize that the lane is disappearing, they immediately try to incorporate into lane 2 putting at risk other drivers. Referring to **FIG. 1B****,** the driver is not distracted but he/she believes that they can overtake and incorporate, but sometimes this miscalculation leads to both vehicles being next to each other in the lane reduction. Autonomous vehicles may also face these situations as well.

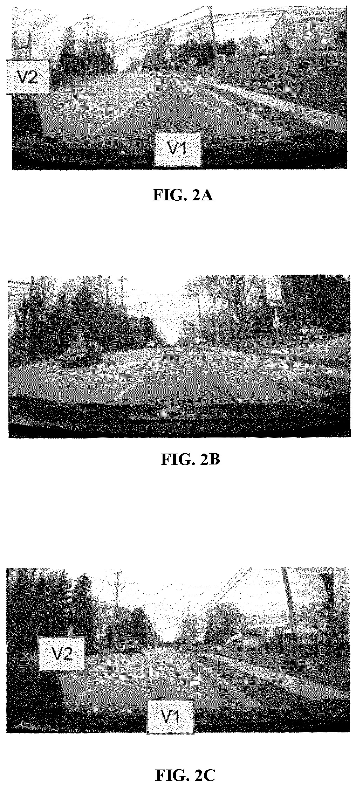

Referring to **FIG. 2A, FIG. 2B, and FIG. 2C****,** they show real case scenarios raised due to lane reduction. In **FIG. 2A** two vehicles V1 and V2, driving at the same speed, are approaching a lane reduction. In **FIG. 2B** at some point, the lane starts disappearing and both vehicles keep driving next to each other. In **FIG. 2C** V2 incorporates to the lane too late and hits V1.

In an embodiment, the vehicle where the emergency is happening will transmit a message. It can be using any or combination of vehicle to vehicle (V2V), vehicle to everything (V2X) or vehicle to infrastructure (V2I) type of communication. In an embodiment, it uses Vehicle-to-vehicle (V2V) communication that enables vehicles to wirelessly exchange information about their speed, location, and heading.

Nearby vehicles detection module: V2V would be based around a peer-to-peer mesh network where each element of the network (a vehicle) is able to generate, receive and relay messages. With this approach, an expansive network can be created in populated areas without the need for expensive infrastructure. Typically, each vehicle would be able to transmit information about their speed, direction, location, braking and lane change intent. In an embodiment, V2V communication is used for detecting and communicating with the nearby vehicles. V2V would form a mesh network using dedicated short-range communications (DSRC). Dedicated short-range communication (DSRC) is a wireless communication technology designed to allow automobiles in the intelligent transportation system (ITS) to communicate with other automobiles or infrastructure technology.

An embodiment described herein relates to a system for identifying lane reduction and making appropriate adjustments to the vehicle's speed and trajectory to avoid collisions. The system comprises a computing platform comprising a processor, a computer vision module, a communication module, and a control system, wherein the system is configured to: detect, by the processor, a lane reduction in a nearest disappearing lane; detect, by the computer vision module, a neighboring vehicle and a driving action of the neighboring vehicle in the nearest disappearing lane; detect, by the computer vision module, a license plate of the neighboring vehicle; receive, by the communication module, a first signal from the neighboring vehicle for a driving mode; detect, the computer vision module, a point of lane disappearance in the nearest disappearing lane; determine, by the processor, a time interval for the neighboring vehicle to reach to the point of lane disappearance; detect, via the processor, a driving action of the neighboring vehicle; execute, by the processor, a risk assessment of a collision based on the driving action; and transmit, via the communication module, a control command to an actuator system of a host vehicle based on the risk assessment.

In an embodiment, the system is configured to be a component of the host vehicle.

In another embodiment, the host vehicle is a first autonomous vehicle.

In yet another embodiment, the neighboring vehicle is one of a second autonomous vehicle and a non-autonomous vehicle.

In yet another embodiment, the driving mode is received via one of a V2X communication or a V2V communication.

In yet another embodiment, the driving mode is one of an autonomous mode and a manual mode.

In yet another embodiment, the lane reduction is detected via the processor using information received via at least one of a GPS, a traffic signal received via traffic control processor and the computer vision module.

In yet another embodiment, the neighboring vehicle is detected using at least one of a radar, a lidar, a camera, a GPS, and a machine learning algorithm.

In yet another embodiment, the lane reduction is detected using at least one of a radar, a lidar, a camera, a GPS, and a machine learning algorithm.

In yet another embodiment, a vehicle type of the neighboring vehicle is determined from the license plate number by referencing a database.

In yet another embodiment, the signal from the neighboring vehicle is received via a Vehicle-to-Vehicle (V2V) communication.

In yet another embodiment, the V2V communication is based on a wireless communication protocol using at least one of a Dedicated Short-Range Communications (DSRC), and a Cellular Vehicle-to-Everything (C-V2X) technology. Dedicated Short-Range Communications (DSRC) is a wireless communication technology that enables short-range communication between vehicles and roadside infrastructure. DSRC operates on the 5.9 GHz frequency band and is designed to support vehicle-to-vehicle (V2V) and vehicle-to-infrastructure (V2I) communication. C-V2X technology operates on the LTE (Long-Term Evolution) network and is based on the 3GPP (Third Generation Partnership Project) standard. C-V2X technology can use both the direct short-range communication and network-based communication modes to enable a range of safety and non-safety applications. With C-V2X, vehicles can communicate with each other and with the surrounding infrastructure in real-time, exchanging information such as speed, location, and direction. This information can be used to alert drivers to potential hazards, optimize traffic flow, and improve the overall safety and efficiency of the transportation system. C-V2X is a key communication technology being considered for use in the development of connected and automated vehicles (CAVs). C-V2X complements other communication technologies, such as Dedicated Short-Range Communications (DSRC), and helps to create a more robust and reliable communication system for CAVs.

DSRC is primarily used for safety applications in the transportation sector, such as collision avoidance, traffic signal timing optimization, and emergency vehicle warning systems. With DSRC, vehicles can communicate with each other and with roadside infrastructure in real-time, exchanging information such as speed, location, and direction. This information can be used to alert drivers to potential hazards and improve the overall safety and efficiency of the transportation system.

DSRC is also being used in the development of connected and automated vehicles (CAVs), as it provides a means for CAVs to communicate with each other and with the surrounding infrastructure. DSRC is one of the communication technologies being considered for use in the connected vehicle environment, along with cellular-based technologies such as 4G and 5G.

In yet another embodiment, the signal from the neighboring vehicle is received via an internet connection. The vehicles can establish the internet connection using a variety of methods, including cellular networks, satellite communication, and dedicated short-range communication (DSRC).

In yet another embodiment, the driving mode of the neighboring vehicle is the manual mode.

In yet another embodiment, driving action of the neighboring vehicle is detected by capturing at least one of a steering angle, a steering rate, a velocity, and an acceleration via the computer vision module.

In yet another embodiment, the host vehicle is configured to establish a communication with the neighboring vehicle to obtain the steering angle, the velocity, and the acceleration.

In yet another embodiment, the collision can occur during a lane change by the neighboring vehicle.

In yet another embodiment, the host vehicle is configured to establish a communication with the neighboring vehicle and provide a boundary for an impact zone as the neighboring vehicle is moving to incorporate into the lane change.

In yet another embodiment, the host vehicle establishes a communication with the neighboring vehicle and requests an adjustment in a motion trajectory while incorporating into the lane change. If the vehicle's control system predicts a collision or detects an obstacle or a change in the environment that requires an adjustment in the motion trajectory, it can take various actions depending on the situation. For example, the vehicle's control system may adjust the steering angle of the wheels to change the vehicle's direction and avoid the collision/obstacle. The vehicle's control system may apply the brakes to slow down or stop the vehicle to avoid the obstacle. In some cases, the vehicle's control system may accelerate the vehicle to move it out of harm's way. The vehicle's control system may plan a new motion trajectory based on the new information it has received and execute that trajectory.

In some embodiments, the vehicle can also use machine learning and artificial intelligence algorithms to improve their trajectory planning and adjust their motion trajectory in real-time based on past experiences and predictions of the future environment. The control system can continuously optimize the trajectory to ensure safe and efficient movement of the vehicle.

In yet another embodiment, the host vehicle establishes a communication with the neighboring vehicle and provides a boundary of the impact zone of the neighboring vehicle.

In yet another embodiment, the point of lane disappearance is estimated by performing lane width detection.

In yet another embodiment, the control command is generated by determining a collision avoidance maneuver for the host vehicle to avoid the impact zone; and autonomously executing the collision avoidance maneuver by the host vehicle. Autonomous vehicles use a variety of sensors and technologies, including lidar, radar, cameras, and advanced algorithms, to detect potential collisions and take the appropriate action to avoid them.

In yet another embodiment, the system is configured to determine a time period for reaching the point of lane disappearance by the neighboring vehicle.

In yet another embodiment, the system is configured to transmit a second signal for changing the driving action to avoid the collision.

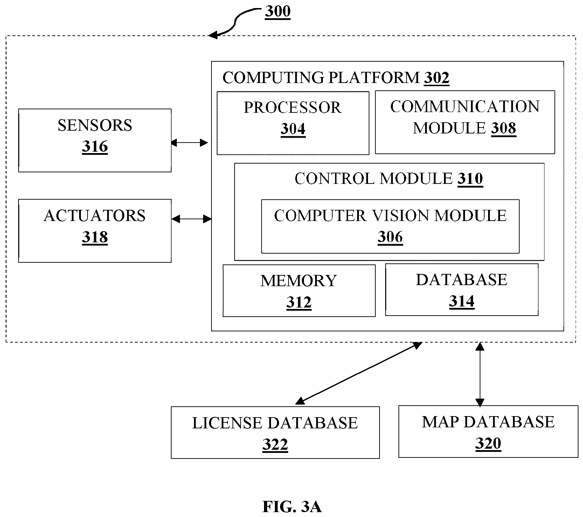

Referring to **FIG. 3A****,** it illustrates a schematic configuration of a lane reduction determination system, according to one or more embodiments. As illustrated in **FIG. 3A****,** the system 300 comprises a computing platform 302 configured to generally manage the device, a sensor 316, and an actuator 318. The computing platform 302 comprises a processor 304, a memory 312, a control module 310, a communication module 308, a computer vision module 306 and a database. The processor analyses the data obtained from plurality of sensors 316, database 314, map database 320, and communication module 308 direct the actuators 318 to physically perform actions such as changing gears, applying brakes, and steering.

The sensors 316 are arranged in and/or around the vehicle to monitor properties of the vehicle and/or an environment in which the vehicle is located. One or more of the sensors 316 may be mounted to measure properties around an exterior of the vehicle. Additionally, or alternatively, one or more of the sensors 316 may be mounted inside a cabin of the vehicle or in a body of the vehicle (e.g., an engine compartment, wheel wells, etc.) to measure properties of the vehicle and/or interior of the vehicle. For example, the sensors 316 include accelerometers, odometers, tachometers, pitch and yaw sensors, wheel speed sensors, microphones, tire pressure sensors, biometric sensors, ultrasonic sensors, infrared sensors, Light Detection and Ranging (lidar), Radio Detection and Ranging System (radar), Global Positioning System (GPS), cameras and/or sensors of any other suitable type. In the illustrated example, the sensors 316 include the range-detection sensors that are configured to monitor object(s) located within a surrounding area of the vehicle.

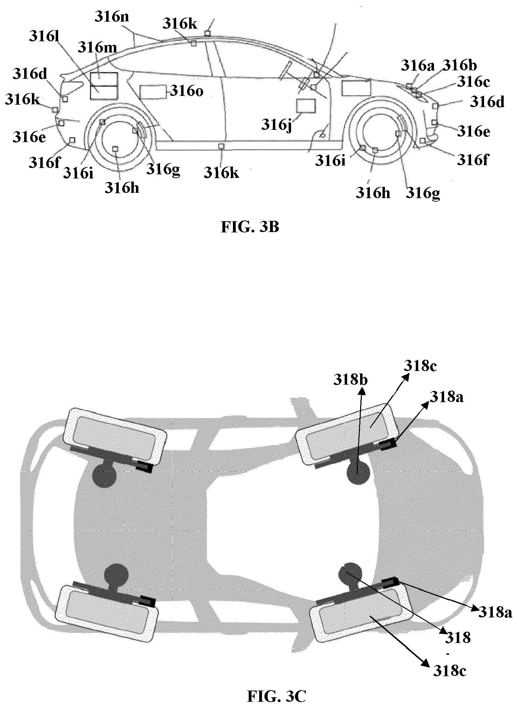

Referring to **FIG. 3B****,** it shows various types of sensors attached to the autonomous vehicle, according to one or more embodiments. The sensors comprise infrared camera 316a, stereo camera 316b, wide view camera 316c, ultrasonic sensor 316d, RADAR sensor 316e, LIDAR sensor 316f, Break sensor system 316g, vibration sensor 316h, speed sensor 316i, GNSS sensors 316j, microphone 316k, sensor controllers 316l, network interface 316m, wireless antenna 316n, IMU sensor(s) 316o. Autonomous vehicles typically use a variety of sensors to monitor the surrounding environment and detect nearby vehicles, including cameras, lidar (light detection and ranging), radar, and ultrasonic sensors.

For monitoring a neighboring vehicles' speed, acceleration, and braking, the most commonly used sensors are one or more of the infrared camera 316a, the wide view camera 316c, the ultrasonic sensor 316d, the RADAR sensor 316e, the LIDAR sensor 316f, the microphone 316k, and the wireless antenna 316n. Radar can detect the distance and relative speed of nearby vehicles by emitting radio waves and analyzing the signals that bounce back. Lidar uses laser beams to measure the distance and speed of surrounding objects, including vehicles. By combining data from these sensors, an autonomous vehicle can create a detailed 3D map of its environment and track the movement of nearby vehicles, allowing it to anticipate their movements and adjust its own speed and trajectory accordingly.

Extensions of an embodiment may provide software that simulates sensor information and environment reactions to actuators. The actuators are able to be commanded or controlled to actuate. Based on the decisions made by the computing platform 302, the vehicle's actuators 318 are activated to control its motion. The various types of actuators that can be used in an autonomous vehicle are an electric motor, a linear actuator, a solenoid, a piezoelectric actuator, an electro-hydraulic actuator, a pneumatic actuator, and the like. The electric motor is used to provide the necessary torque and speed to control the motion of the vehicle's wheels. The linear actuator is used to control the position and movement of various parts of the vehicle, such as the throttle, brakes, and steering system. The solenoid is used to control the flow of fluids, such as hydraulic fluids, in the vehicle's transmission and braking systems. The piezoelectric actuator is used to generate small, precise movements, such as those required for the vehicle's suspension system. The electro-hydraulic actuator is used to provide precise control over hydraulic systems, such as those used for braking and steering. The pneumatic actuators are used to control air pressure in various systems, such as the vehicle's suspension system.

Referring to **FIG. 3C****,** it shows various types of actuators attached to the autonomous vehicle, according to one or more embodiments. The actuators comprise steering actuator 318a, brakes actuators 318b, and accelerator actuators 318c. The steering actuator 318a may comprise a first steering actuator control unit, operated on the first on-board network, for controlling the first steering actuator. The actuator system steering actuator 318a further comprises a second steering actuator, operated on a second on-board network of the vehicle designed to be redundant to the first on-board network, and the brake actuator 318b, operated on the second on-board network of the vehicle, having a brake actuator and a brake actuator control unit for controlling the brake actuator. Here, the brake actuator device 318b further comprises a second steering actuator control unit, operated on the second on-board network of the vehicle, for controlling the second steering actuator. Due to the configuration of the second steering actuator inside the brake control device, the number of devices to be installed can be reduced. In this way, assembly expenses are also reduced. In addition, with the installation of such a brake actuator device it is possible to prepare a conventional vehicle for automatic driving relatively easily. In a specific embodiment of the present invention, it is provided that the brake actuator device includes a housing that accommodates the brake actuator and the brake actuator control unit assigned to the brake actuator. The steering actuator control unit is situated inside the housing. With the installation of the steering actuator control unit in the housing of the brake actuator device, the assembly expense, when upgrading the vehicle, can be significantly reduced. Through the use of a common housing for the brake actuator device and the steering actuator control unit, the space requirement inside the vehicle is also reduced.

The memory 312 may comprise a read only memory (ROM), a random access memory (RAM), and so on. The computing platform 302 loads a program stored in the ROM to the RAM and implements various functions by executing the program loaded in the RAM by the CPU. The computing platform 302 may be constituted with a control module 310.

The database 314 stores programs to be executed by the processor, data to be used by the processor for processing, and the like.

The control module 310 may comprise a plurality of controllers. A first controller may be used for autonomous driving functions, a second controller may be used for functional safety functions, a third controller comprising a computer vision module 306 may be used for artificial intelligence functionality (e.g., computer vision and neighboring vehicle's motion prediction), a fourth controller may be used for infotainment functionality, a fifth controller may be used for redundancy in emergency conditions, and/or other controllers. In some examples, a single controller may handle two or more of the above functionalities, two or more controllers may handle a single functionality, and/or any combination thereof.

The computer vision module 306 comprises a plurality of algorithms for Lane reduction detection, neighboring vehicle detection, license plate detection, speed detection, distance detection, lane width detection, and turning light detection. The map database 320 is a database in which map information is stored. The map database 320 is formed in a storage device such as a hard disk drive (HDD) provided in the vehicle V. The map information includes positional information on roads, information on road shapes (e.g., types such as a curve and a linear part, a curvature of a curve, and the like), positional information on intersections and branch points, speed limits set on roads, positional information on fixed obstacles such as poles, and so on. The map database 320 may be provided in a computer in a facility such as an information processing center communicable with the vehicle V. Further, the map information includes information on a division line of a lane. The information on a division line of a lane is information that can specify the position and shape of the division line. Note that a division line of a lane is a line (e.g., a white line) sectioning the lane from a region other than the lane. The license database 322 is a database in which license plate related information is stored. It typically stores information related to the vehicle associated with a particular license plate. This may comprise: a) Registration information comprising the name and address of the registered owner of the vehicle, as well as the make, model, year, and VIN (Vehicle Identification Number) of the vehicle; b) Vehicle history comprising information about the vehicle's history, such as any accidents, thefts, or other incidents that may have been reported; and c) Outstanding tickets or violations comprising information about any outstanding parking tickets, traffic violations, or other infractions associated with the vehicle.

In some embodiments, a GPS receiving portion and a map database (a map information storage portion) are connected to the computing platform 302. The GPS receiving portion measures the position of the vehicle V (e.g., latitude and longitude of the vehicle V) by receiving signals from three or more GPS satellites. The GPS receiving portion transmits measured positional information of the vehicle V to the computing platform 302.

An embodiment relates to a vehicle comprising the system, according to one or more embodiments. The vehicle comprises a system further comprising: a processor, a computer vision module, a communication module, and a control system, wherein the system is configured to: detect, by the processor, a lane reduction in a nearest disappearing lane; detect, by the computer vision module, a neighboring vehicle and a driving action of the neighboring vehicle in the nearest disappearing lane; detect, by the computer vision module, a license plate of the neighboring vehicle; receive, by the communication module, a first signal from the neighboring vehicle for a driving mode; detect, by the computer vision module, a point of lane disappearance in the nearest disappearing lane; determine, by the processor, a time interval for the neighboring vehicle to reach to the point of lane disappearance; detect, via the processor, a driving action of the neighboring vehicle; execute, by the processor, a risk assessment of a collision based on the driving action; and transmit, via the communication module, a control command to an actuator system of a host vehicle based on the risk assessment.

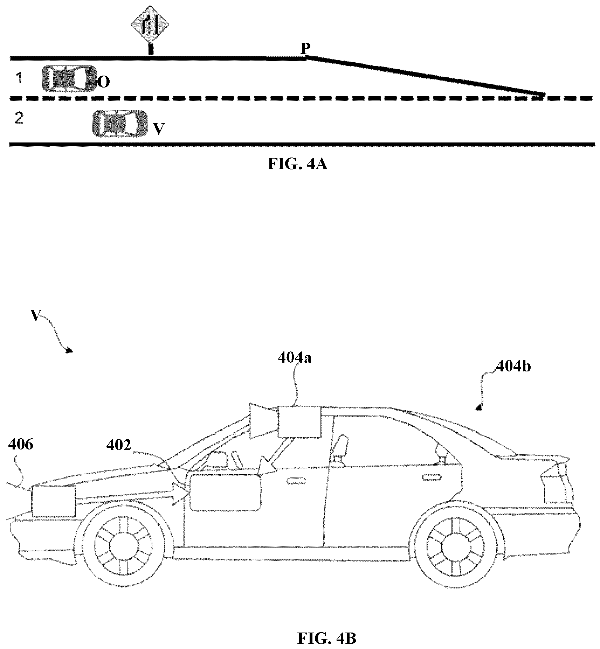

Referring to **FIG. 4A****,** it illustrates a response of a vehicle comprising the system in a lane reduction situation, according to one or more embodiments. The vehicle **(V)** will detect if it is approaching a lane reduction ("Lane 1" **1** is the lane that will disappear and "lane 2" **2** the lane that will continue). The vehicle **V** will detect if there is a nearby vehicle **(O)** in lane 1 and will detect if **O** is driving faster or slower than **V. V** will detect at which point **P** the lane starts disappearing and will determine how long it will take for it to reach the point **P. V** will do the same calculation for **O. V** will compare **O**'s with **V**'s time and based on that and other factors such as speed limit/Other vehicles/lanes availability, the **V** will or will not modify its driving to prevent an accident.

Referring to **FIG. 4B****,** the vehicle **V** comprises a lane reduction detection system 402 that using plurality of sensors 404a and 404b detects a lane reduction and a neighboring vehicle. By predicting/ detecting a driving action by the neighbouring vehicle, the lane reduction system takes a suitable decision to avoid risk of collision and transmits a control command to the actuator system 406 of the vehicle.

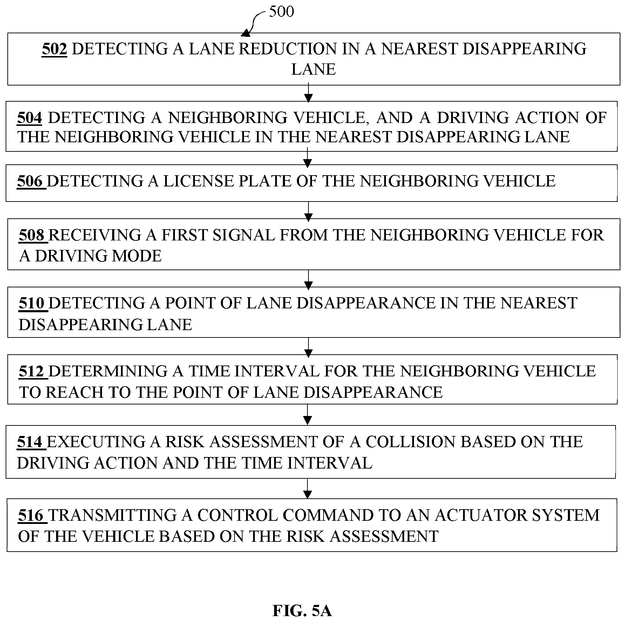

Referring to **FIG. 5A****,** it shows a flowchart for a method for detecting lane reduction situations and making the appropriate adjustments to avoid collisions, according to an embodiment. The method 500 comprises the following steps:
Step 502 of the method 500 comprises detecting a lane reduction in a nearest disappearing lane. The detection of lane reduction comprises detection of a disappearing or narrowing or blocked lane.
Step 504 of the method 500 comprises detecting a neighboring vehicle and a driving action of the neighboring vehicle in the nearest disappearing lane.
Step 506 of the method 500 comprises detecting a license plate of the neighboring vehicle.
Step 508 of the method 500 comprises receiving a first signal from the neighboring vehicle for a driving mode.
Step 510 of the method 500 comprises detecting a point of lane disappearance in the nearest disappearing lane.
Step 512 of the method 500 comprises determining a time interval for the neighboring vehicle to reach the point of lane disappearance.
Step 514 of the method 500 comprises executing a risk assessment of a collision based on the driving action and the time interval.
Step 516 of the method 500 comprises transmitting a control command to an actuator system of the vehicle based on the risk assessment.

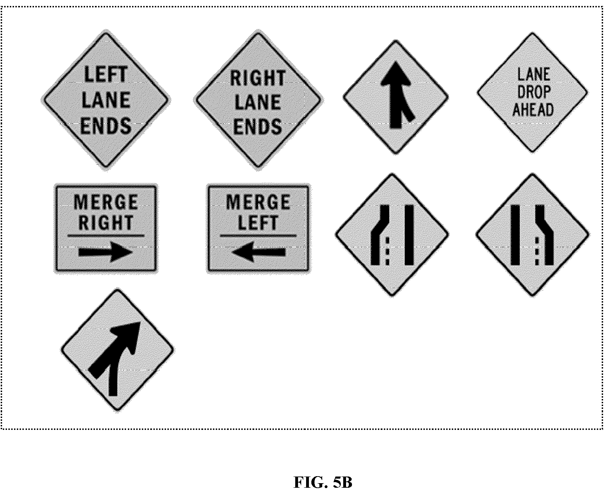

Referring to **FIG. 5B****,** it shows traffic signage for a lane reduction situation, according to one or more embodiments. In some embodiments, the vehicle via the computer vision module can recognize upcoming lane reduction situations and activate a lane reduction protocol in the computing unit.

An embodiment relates to a method to detect and prevent possible accidents in lane reductions. The method comprises the method comprising: detecting a lane reduction in a nearest disappearing lane; detecting a neighboring vehicle in the nearest disappearing lane; detecting a license plate of the neighboring vehicle; receiving a first signal from the neighboring vehicle for a driving mode; detecting a point of lane disappearance in the nearest disappearing lane; determining a time interval for the neighboring vehicle to reach to the point of lane disappearance; detecting a driving action of the neighboring vehicle; executing a risk assessment of a collision based on the driving action and the time interval; and transmitting a control command to an actuator system of the vehicle based on the risk assessment.

In an embodiment, the lane reduction is detected using at least one of a GPS information, a traffic sign and a lane marking.

In another embodiment, the method further comprises detecting a cone distance to the lane marking.

In yet another embodiment, the neighboring vehicle is detected using a camera of a host vehicle.

In yet another embodiment, the license plate is detected using the camera.

In yet another embodiment, the camera is connected to a computer vision system of the host vehicle.

In yet another embodiment, the method further comprises determining a current position of the neighboring vehicle and the host vehicle.

In yet another embodiment, the current position of the neighboring vehicle is detected by a radar sensor of the computer vision system of the host vehicle.

In yet another embodiment, the current position of the host vehicle and the current position of the neighboring vehicle are detected using a GPS of a global navigation satellite system.

In yet another embodiment, the method further comprises predicting a lane change by the neighboring vehicle.

In yet another embodiment, the lane change is predicted by capturing at least one of a steering angle, a steering rate, a velocity, and an acceleration.

In yet another embodiment, the method further comprises detecting a lane change by the neighboring vehicle.

In yet another embodiment, the lane change is detected by a turn signal of the neighboring vehicle using the computer vision system.

In yet another embodiment, the lane change by the neighboring vehicle is detected by tracking a position and a movement of the neighboring vehicle over time.

In yet another embodiment, the lane change by the neighboring vehicle is detected via a sensor of the host vehicle by detecting a speed and a direction of movement of the neighboring vehicle, wherein the sensor is at least one of a radar and a lidar.

In yet another embodiment, the method further comprises detecting a lane width of the nearest disappearing lane.

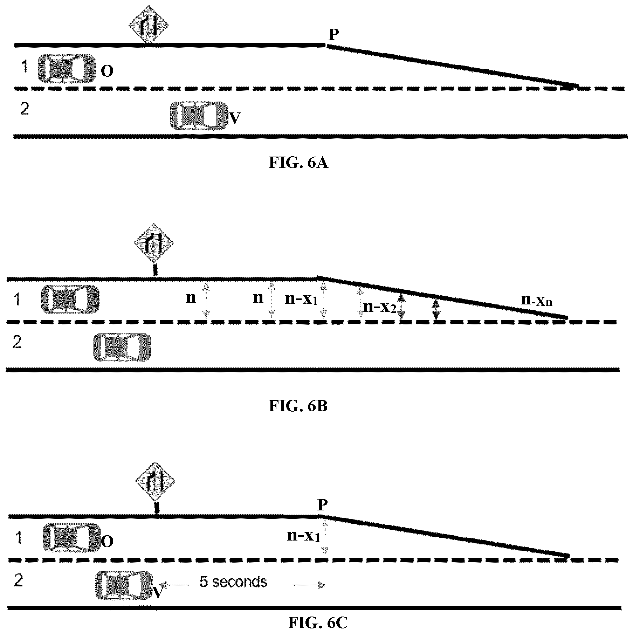

Referring to **FIG.** 6A, Vehicle V is driving to its destination when it approaches a lane reduction. This can be detected with GPS information and/or with traffic signs and/or lane markings. V will detect if there is a nearby vehicle (O) in lane 1 (The lane that will disappear). If there is no nearby vehicle O in lane 1, the process will end.

If V detects a nearby vehicle O, it will detect if O is autonomous or non-autonomous by performing license plate detection and checking in a database if that license plate number is assigned to an autonomous or non-autonomous vehicle.

If O is autonomous, the AV will ask via V2V if O is driving in autonomous mode or in manual mode. If O is driving in autonomous mode, the process will end; if O is autonomous but driving in manual mode, the process will continue. If O is non-autonomous, the process will continue.

Referring to **FIG. 6B****,** it illustrates lane width detection by the vehicle according to one or more embodiments. The vehicle V will detect where the lane starts disappearing by performing lane width detection. The computing unit via the computer vision module is configured to detect nominal width n and a width (n-x₁, n-x₁, ..., n-xₙ) shorter than nominal width n.

Referring to **FIG. 6C****,** it illustrates a time period within which a vehicle, comprising the system detecting/tracking a nearby vehicle, can reach to a point of lane disappearance, according to one or more embodiments. Vehicle V will determine how long it will take for V to reach a point P from where the lane starts disappearing (In an example 5 seconds). V will detect if vehicle O turns the "turning light" on and starts braking. If so, the process will end, meaning that a collision between O and V is unlikely.

V will detect O's speed in real time. V will compare its own speed with O's speed to see who is driving faster, to detect if the O's driver has intentions of overtaking V. If O is moving faster, depending on the speed and distance to lane reduction, it can be risky for V. If O is moving at a similar speed as V, depending on where O is respecting V, it can be risky for V. If O is moving slower than V, depending on where O is respecting V, it can be safe for V. Vehicle V will execute a risk assessment based on different scenarios (More scenarios can be added, following a similar logic).

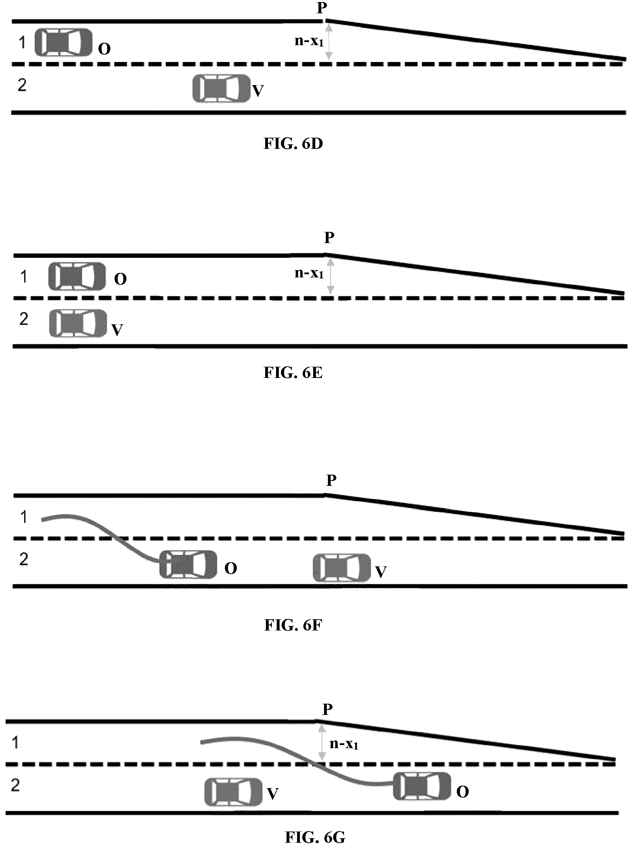

In an example, there can be a scenario 1 where the neighboring vehicle is too far away from the lane reduction. The scenario 1 is illustrated in **FIG. 6D****.** The neighboring vehicle O will reach the lane reduction in 15 seconds while V will do it in 5 seconds. In this case, the vehicle V will take no lane reduction related actions and the process will end because an accident is very unlikely to happen.

In an example, there can be a scenario where the neighboring vehicle is too far away from the lane reduction. However, the neighboring vehicle and the host vehicle are moving at the same speed side by side to each other. As illustrated in **FIG. 6E****,** the neighboring vehicle O is moving at a similar speed to vehicle V and neighboring vehicle O and vehicle V are next to each other. In this scenario, vehicle V will detect if there is a neighboring vehicle behind V. It will also compare its speed with the speed limit. If vehicle V can speed up and give more space to vehicle O in lane 2, vehicle V will do so.

The scenario 2 is illustrated in **FIG. 6F****.** The neighboring vehicle O is moving at a similar speed to vehicle V and neighboring vehicle O and vehicle V are next to each other. In this case, the vehicle V will detect if there is a neighboring vehicle O2 behind the vehicle V. V will also compare its speed with the speed limit. If there is a scope of increasing the speed, V can speed up and give more space to O in lane 1 for a lane change.

In an example, there can be a scenario 3 where the neighboring vehicle is too far away from the lane reduction and the vehicle is moving at the speed limit. The scenario 3 is illustrated in **FIG. 6G****.** The neighboring vehicle O is moving at a similar speed to vehicle V and neighboring vehicle O and vehicle V are next to each other. Since there is no scope of increasing the speed, V cannot speed up beyond the speed limit. In this case, the vehicle V will detect if there is a neighboring vehicle O2 behind the vehicle V. V can brake if there is no vehicle behind V and, at some point, O will have enough time to incorporate into lane 2.

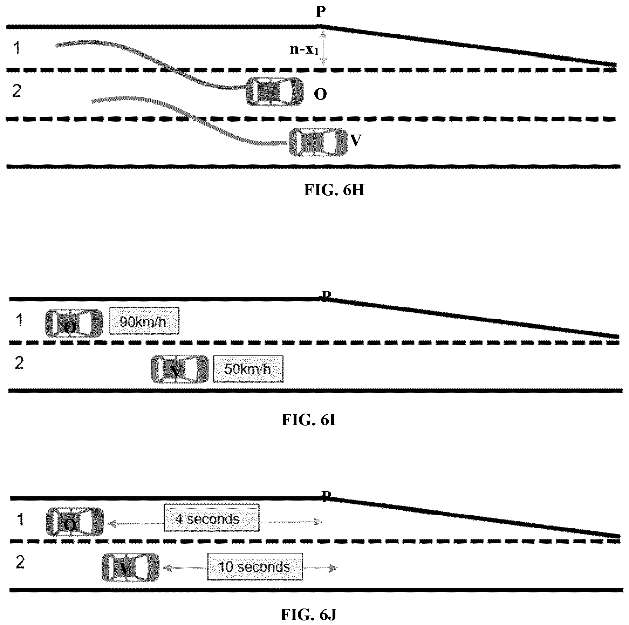

In an example, there can be a scenario 4 where there is an availability of a lane 3 for the vehicle for a lane change. The scenario 4 is illustrated in **FIG. 6H****.** The neighboring vehicle O is moving at a similar speed to vehicle V and neighboring vehicle O and vehicle V are next to each other. Since there is an availability of a lane 3 for the vehicle for a lane change, vehicle V will execute the lane change.

In an example, there can be a scenario 5 where neighboring vehicle O is driving faster than the vehicle V and vehicle O is behind the vehicle V. The scenario 5 is illustrated in **FIG. 6I** where the neighboring vehicle O is moving at 90km/h and vehicle V is moving at 50 km/h. In this case, vehicle V will infer that O wants to overtake V. Vehicle V will determine the time needed for neighboring vehicle O to reach the lane reduction. V will estimate how long it will take for V to reach the lane reduction.

As illustrated in **FIG. 6J****,** the time period T 1 for O to reach point P (4 sec) is less than the time period T2 for V to reach point P (10 sec). In this case, if O's time is considerably shorter than V's time, vehicle V will not modify its driving. In another situation, if O's time is similar to V's time, vehicle V may slow down. In yet another situation, if O's time is considerably greater than V's time, vehicle V will not modify its driving.

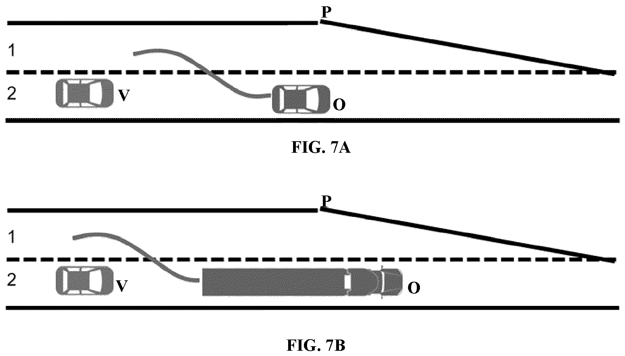

In an embodiment, the system may take into consideration the type of neighboring vehicle based on the size of the neighboring vehicle. The type of the neighboring vehicle can be one of a sub-compact vehicle, compact vehicle, mid-size vehicle, full size vehicle, Sport Utility Vehicle (SUV), Truck and bus. Referring to **FIG. 7A and FIG. 7B****,** vehicle V is driving to its destination when it approaches a lane reduction. This can be detected with GPS information and/or with traffic signs and/or lane markings. V will detect if there is a nearby vehicle (O) in lane 1 (The lane that will disappear). If there is no nearby vehicle O in lane 1, the process will end. If V detects a nearby vehicle O, it will detect if O is autonomous or non-autonomous by performing license plate detection and checking in a database if that license plate number is assigned to an autonomous or non-autonomous vehicle. The system will also obtain the type of vehicle or model from the license plate database and therefore knows the length of the vehicle, which would be used for determining the time that vehicle O needs to incorporate.

In an embodiment, the system may detect the type of the neighboring vehicle using computer vision.

If O is autonomous, the AV will ask via V2V if the O is driving in autonomous mode or in manual mode. If O is driving in autonomous mode, the process will end; if O is autonomous but driving in manual mode, the process will continue. If O is non-autonomous, the process will continue.

Referring to **FIG. 7A****,** the neighboring car O is a compact car (sedan. Referring to **FIG. 7B****,** the neighboring car is a truck (semi-truck). The vehicle while considering scenario 1 to 5 will also consider the type of the vehicle for risk assessment and decision making.

In an embodiment, the system can detect temporarily closed lanes. The computer vision module can detect one or more of a cone, a barricade, a jersey barrier, a traffic barrel, a portable traffic signal, a temporary pavement marking and a flagger and based on the presence of these one or more markers detects a temporarily closed lane.

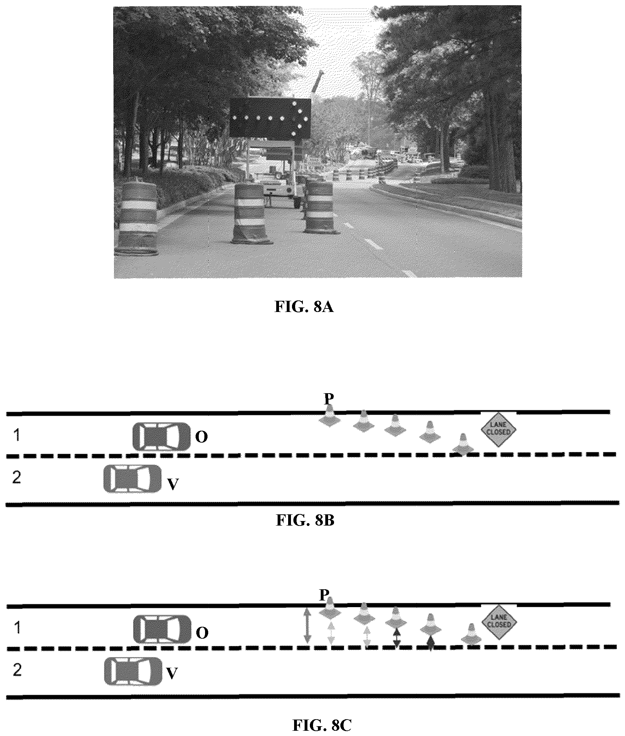

Referring to **FIG. 8A****,** a vehicle V comprising the system driving to its destination approaches a temporarily closed lane having traffic barrel as a traffic diversion marker. Referring to **FIG. 8B****,** a vehicle V comprising the system driving to its destination approaches a temporarily closed lane having cones as a traffic diversion marker. This can be detected using a plurality of cameras and a computer vision module. In this case, instead of detecting the lane width variation, the vehicle V would detect the traffic diversion marker's (e.g., Cones) distance to the lane mark and therefore the approaching of a temporary lane closure as illustrated in **FIG. 8C****.** V will detect if there is a nearby vehicle (O) in lane 1 (The lane that is temporarily closed). If there is no nearby vehicle O in lane 1, the process will end. If V detects a nearby vehicle O, it will detect if O is autonomous or non-autonomous by performing license plate detection and checking in a database if that license plate number is assigned to an autonomous or non-autonomous vehicle. The system may also obtain the type of vehicle or model from the license plate database and therefore it knows the length of the vehicle, which would be used for determining the time that vehicle O needs to incorporate.

If O is autonomous, the AV will ask via V2V if the O is driving in autonomous mode or in manual mode. If O is driving in autonomous mode, the process will end; if O is autonomous but driving in manual mode, the process will continue. If O is non-autonomous, the process will continue. The vehicle will consider the scenario 1 to 5 for risk assessment and decision making.

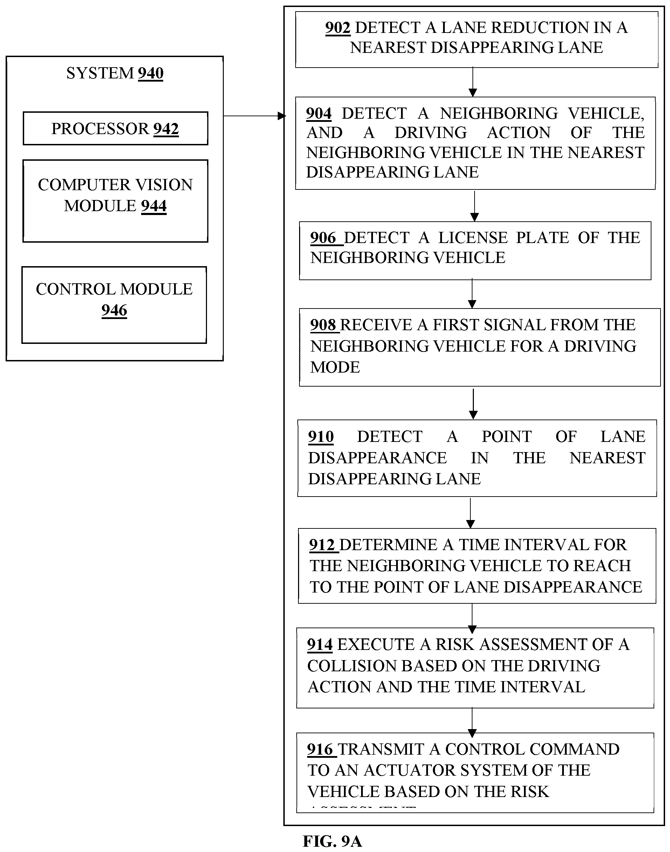

**FIG. 9A** shows a block diagram of a system to detect a possible lane change due to lane reduction and a prediction of possible action by neighboring vehicles according to an embodiment. According to an embodiment it is a system 940, comprising: a processor 942, a computer vision module 944, and a control module 946; wherein the processor is operable to: detect, by the processor, a lane reduction in a nearest disappearing lane 902; detect, by the computer vision module, a neighboring vehicle and a driving action of the neighboring vehicle in the nearest disappearing lane 904; detect, by the computer vision module, a license plate of the neighboring vehicle 906; receive, by the communication module, a first signal from the neighboring vehicle for a driving mode 908; detect, a point of lane disappearance in the nearest disappearing lane 910; determine, by the processor, a time interval for the neighboring vehicle to reach to the point of lane disappearance 912; execute, by the processor, a risk assessment of a collision based on the driving action 914; and transmit, via the communication module, a control command to an actuator system of a host vehicle based on the risk assessment 916.

According to an embodiment, the host vehicle is an autonomous vehicle.

According to an embodiment, the neighboring vehicle comprises one of a semitrailer, a bus, an SUV, a tow vehicle, a truck, a recreation vehicle, a trailer, and a heavy construction equipment.

According to an embodiment, the system is further operable to detect neighboring vehicles and neighboring lanes. According to an embodiment, the neighboring vehicles and the neighboring lanes are detected via the computer vision module comprising a radar, a lidar, a camera, a GPS, and an artificial intelligence engine comprising a machine learning algorithm.

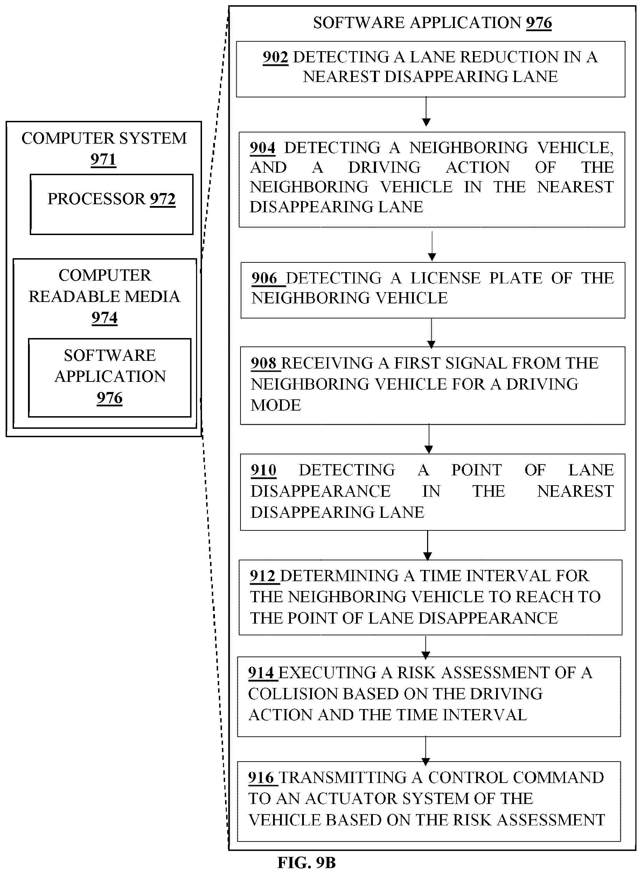

**FIG. 9B** shows a block diagram of a non-transitory computer-readable medium 974 to execute operations so as to detect a possible lane change due to lane reduction, a prediction of possible action by neighboring vehicle and a collision, according to an embodiment. A non-transitory computer-readable medium 974 having stored thereon instructions executable by a computer system 971 comprising a processor 972 to execute operations via software application 976 comprising: detecting a lane reduction in a nearest disappearing lane 922; detecting a neighboring vehicle and a driving action of the neighboring vehicle in the nearest disappearing lane 924; detecting a license plate of the neighboring vehicle 926; receiving a first signal from the neighboring vehicle for a driving mode 928; detecting a point of lane disappearance in the nearest disappearing lane 930; determining a time interval for the neighboring vehicle to reach to the point of lane disappearance 932; executing a risk assessment of a collision based on the driving action and the time interval 934; and transmitting a control command to an actuator system of the vehicle based on the risk assessment 936.

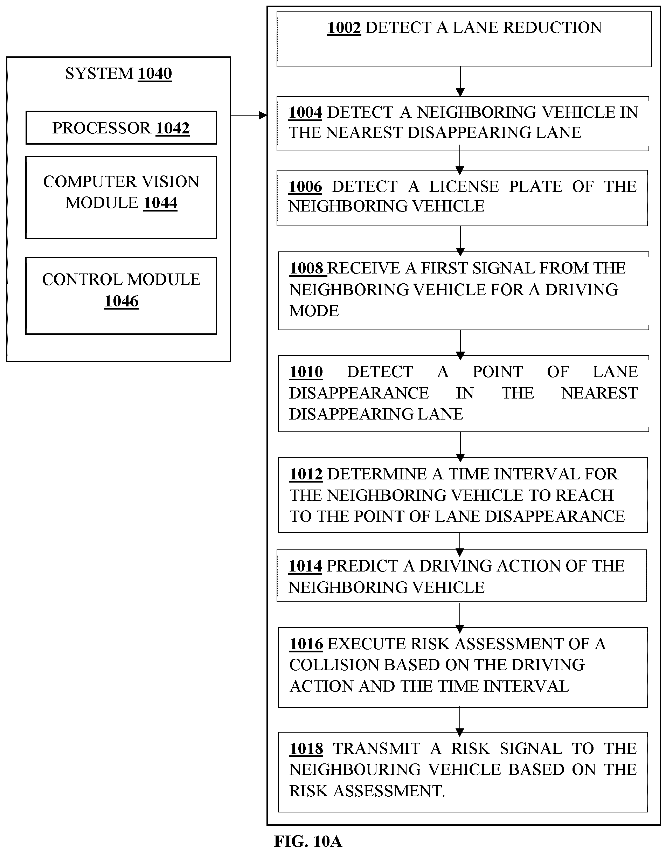

**FIG. 10A** shows a block diagram of a system to detect lane reduction situations and transmit an appropriate message to the neighboring vehicle to avoid collisions, according to an embodiment. According to an embodiment it is a system 1040, comprising: a processor 1042, a computer vision module 1044, and a control module 1046; wherein the processor is operable to: detect, by the processor, a lane reduction in a nearest disappearing lane 1002; detect, by the computer vision module, a neighboring vehicle and a driving action of the neighboring vehicle in the nearest disappearing lane 1004; detect, by the computer vision module, a license plate of the neighboring vehicle 1006; receive, by the communication module, a first signal from the neighboring vehicle for a driving mode 1008; detect a point of lane disappearance in the nearest disappearing lane 1010; determine, by the processor, a time interval for the neighboring vehicle to reach to the point of lane disappearance 1012; predict, via the processor, a driving action of the neighboring vehicle 1014; execute, by the processor, a risk assessment of a collision based on the driving action 1016; and transmit, via the communication module, a risk signal to the neighboring vehicle based on the risk assessment 1018.

According to an embodiment, the host vehicle is an autonomous vehicle.

According to an embodiment, the neighboring vehicle comprises one of a semitrailer, a bus, an SUV, a tow vehicle, a truck, a recreation vehicle, a trailer, and a heavy construction equipment.

According to an embodiment, the system is further operable to detect neighboring vehicles and neighboring lanes. According to an embodiment, the neighboring vehicles and the neighboring lanes are detected via the computer vision module comprising a radar, a lidar, a camera, a GPS, and an artificial intelligence engine comprising a machine learning algorithm.

An embodiment relates to a method for detecting and preventing possible accidents in lane reductions by transmitting a message to a neighboring vehicle. The method comprises: detecting a lane reduction; detecting a neighboring vehicle in a nearest disappearing lane; performing license plate detection and checking in a database if that license plate number is assigned to a non-autonomous; performing lane width detection to detect a point of lane disappearance in the nearest disappearing lane; determine a time interval for the neighboring vehicle to reach to the point of lane disappearance; predicting a driving action of the neighboring vehicle; executing a risk assessment based on the driving action and the time interval; transmitting a risk signal to the neighboring vehicle based on the risk assessment; and transmitting a control command to an actuator system of the vehicle based on the risk assessment wherein the neighboring vehicle is driving in a manual mode.

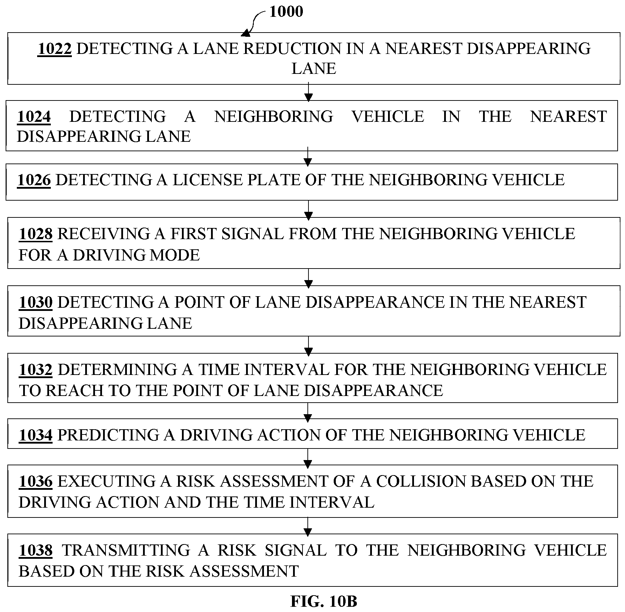

Referring to **FIG. 10B****,** it shows a flowchart for a method for detecting lane reduction situations and then transmitting an appropriate message to the neighboring vehicle to avoid collisions, according to an embodiment. The method 1000 comprises the following steps:
Step 1022 of the method 1000 comprises detecting a lane reduction in a nearest disappearing lane. The detection of lane reduction comprises detection of a disappearing or narrowing or blocked lane.
Step 1024 of the method 1000 comprises detecting a neighboring vehicle in the nearest disappearing lane.
Step 1026 of the method 1000 comprises detecting a license plate of the neighboring vehicle.
Step 1028 of the method 1000 comprises receiving a first signal from the neighboring vehicle for a driving mode.
Step 1030 of the method 1000 comprises detecting a point of lane disappearance in the nearest disappearing lane.
Step 1032 of the method 1000 comprises determining a time interval for the neighboring vehicle to reach the point of lane disappearance.
Step 1034 of the method 1000 comprises predicting a driving action of the neighboring vehicle.
Step 1036 of the method 1000 comprises executing a risk assessment of a collision based on the driving action and the time interval.
Step 1038 of the method 1000 comprises transmitting a risk signal to the neighboring vehicle based on the risk assessment.

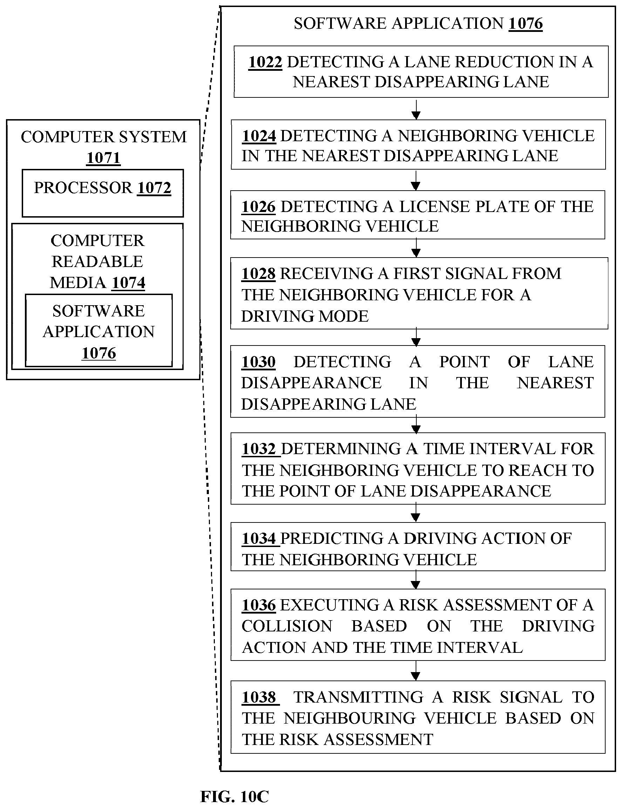

**FIG. 10C** shows a block diagram of a non-transitory computer-readable medium 1074 to execute operations so as to detect lane reduction situations and transmit an appropriate message to the neighboring vehicle to avoid collisions, according to an embodiment. A non-transitory computer-readable medium 1074 having stored thereon instructions executable by a computer system 1071 comprising a processor 1072 to execute operations via software application 1076 comprising: detecting a lane reduction in a nearest disappearing lane 1022; detecting a neighboring vehicle in the nearest disappearing lane 1024; detecting a license plate of the neighboring vehicle 1026; receiving a first signal from the neighboring vehicle for a driving mode 1028; detecting a point of lane disappearance in the nearest disappearing lane 1030; determining a time interval for the neighboring vehicle to reach to the point of lane disappearance 1032; predicting a driving action of the neighboring vehicle 1034; executing a risk assessment of a collision based on the driving action and the time interval 1036; and transmitting a risk signal to the neighboring vehicle based on the risk assessment 1038.

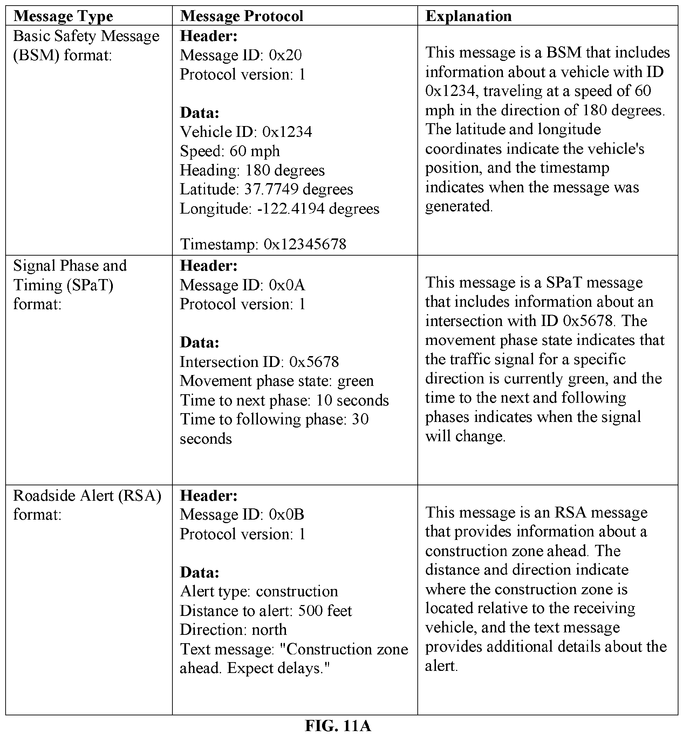

**FIG. 11A** shows example messages in Dedicated Short-Range Communications (DSRC) message format. **FIG. 11A** shows: (i) Basic Safety Message (BSM) format: BSM is a fundamental message type in DSRC, used for transmitting information about a vehicle's status, location, and movement to other vehicles in the area. In the example message, the header contains the message ID and protocol version, while the data section contains specific information about the vehicle, such as its ID, speed, heading, and position. The timestamp indicates when the message was generated and can be used by other vehicles to determine the current status of the transmitting vehicle; (ii) Signal Phase and Timing (SPaT) format: The SPaT message provides information about the current state of traffic signals at an intersection, including which phase is currently active and when the signal will change. This information can be used by vehicles to optimize their driving behavior and avoid collisions. In the example message, the header contains the message ID and protocol version, while the data section includes the ID of the intersection, the state of the movement phase, and the time remaining until the next and following phases; (iii) Roadside Alert (RSA) format: The RSA message is used to notify vehicles about hazards or other important information on the road ahead, such as construction zones, accidents, or detours. In the example message, the header contains the message ID and protocol version, while the data section includes the type of alert (construction), the distance to the alert, the direction of the alert, and a text message providing additional details about the alert.

According to an embodiment, there are other possible elements that can be included in each **message** format, for example, the BSM format may also include information on: acceleration, size and weight, vehicle safety extensions including Brakes, Lights, Wipers, Transmission and powertrain, Vehicle dimensions and Vehicle identification information including identification number and vehicle type.

There are several other message formats available in DSRC protocol besides the three **examples** provided earlier. Some of these message formats include MAP (Message Assistance for Path Provisioning) format: This message provides a map of the road network, including information about the road layout, speed limits, and other relevant details; CAM (Cooperative Awareness Message) format: Similar to the BSM message format, this message provides information about a vehicle's current status, such as speed, position, and heading. CAM messages are typically sent at a higher frequency than BSM messages to support more accurate situational awareness; DENM (Decentralized Environmental Notification Message) format: This message provides information about environmental conditions that may affect driving, such as weather conditions, visibility, and road surface conditions; EV (Emergency Vehicle) format: This message provides information about emergency vehicles, such as their location and direction of travel, to help other drivers safely navigate around them; TCI (Traffic Control Information) format: This message provides information about traffic conditions, such as congestion, accidents, and construction zones, to help drivers make informed decisions about their routes.

Overall, the various message formats available in DSRC protocol support a wide range of use cases, from basic vehicle-to-vehicle communication to more complex applications such as real-time traffic management and emergency response.

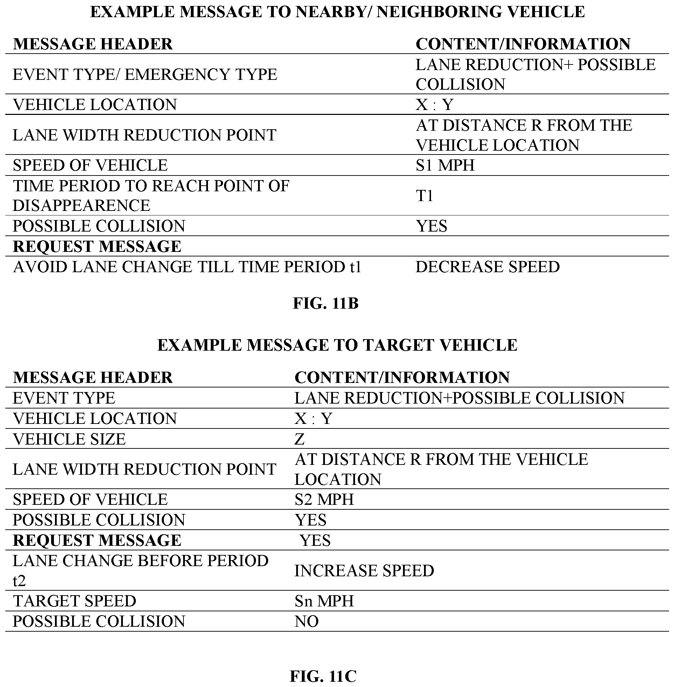

**FIG. 11B** shows an example message from the host vehicle to neighboring vehicles. It may comprise elements that relate to lane reduction alert and a request message where it may request for a speed decrease so that a coordinated action can be performed. Such a message can be a broadcast message, or a message sent to an individual neighboring vehicle or a group of selected vehicles that need to execute the request.

**FIG. 11C** shows an example message from the host vehicle to the neighboring vehicle. In an embodiment, it may comprise the information related to lane reduction and possible collision, and a request message to adjust them to a target value so as to avoid a collision.

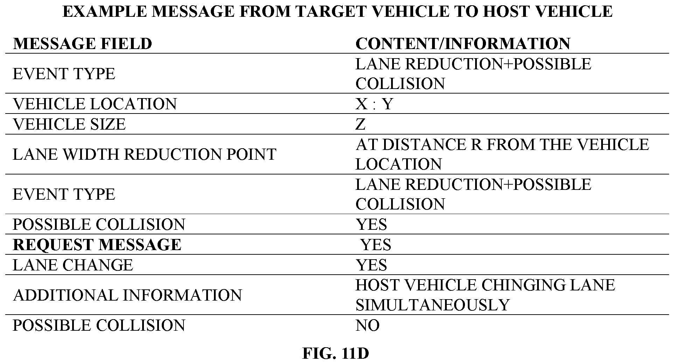

**FIG. 11D** shows an example message from the host vehicle to a neighboring vehicle. In an embodiment, it may comprise the information related to land reduction, possible collision, availability of a third available lane and a request message for lane change at a particular time so as to avoid a collision.

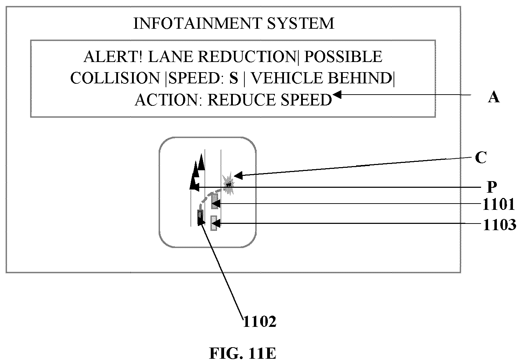

**FIG. 11E** shows an example alert message displayed in the host vehicle 1101 to neighboring vehicles 1102. In an embodiment, it may comprise of an alert message along with a graphical representation to show a lane reduction, a point of start of lane disappearing P, a possible collision C, a nearby vehicle 1103 in the same lane as the host vehicle 1101 and a possible action to avoid A the collision.

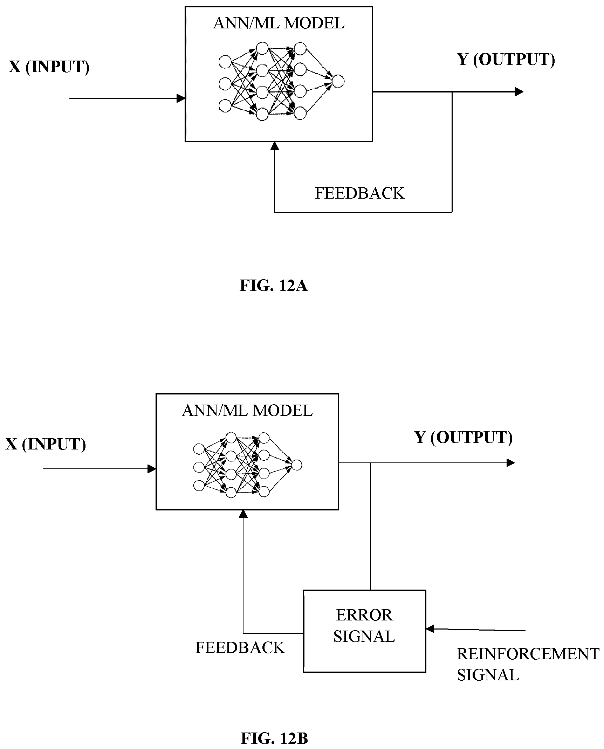

**FIG. 12A** shows a structure of the neural network / machine learning model with a feedback loop. Artificial neural networks (ANNs) model comprises an input layer, one or more hidden layers, and an output layer. Each node, or artificial neuron, connects to another and has an associated weight and threshold. If the output of any individual node is above the specified threshold value, that node is activated, transmitting data to the next layer of the network. Otherwise, no data is passed to the next layer of the network. A machine learning model or an ANN model may be trained on a set of data to take a request in the form of input data, make a prediction on that input data, and then provide a response. The model may learn from the data. Learning can be supervised learning and/or unsupervised learning and may be based on different scenarios and with different datasets. Supervised learning comprises logic using at least one of a decision tree, logistic regression, and support vector machines. Unsupervised learning comprises logic using at least one of a k-means clustering, a hierarchical clustering, a hidden Markov model, and an apriori algorithm. The output layer may predict or detect a collision and the severity of the collision based on the input data, such as, neighboring vehicle parameters, host vehicle and neighboring vehicle locations and orientations.

In an embodiment, ANNs may be a Deep-Neural Network (DNN), which is a multilayer tandem neural network comprising Artificial Neural Networks (ANN), Convolution Neural Networks (CNN) and Recurrent Neural Networks (RNN) that can recognize features from inputs, do an expert review, and perform actions that require predictions, creative thinking, and analytics. In an embodiment, ANNs may be Recurrent Neural Network (RNN), which is a type of Artificial Neural Networks (ANN), which uses sequential data or time series data. Deep learning algorithms are commonly used for ordinal or temporal problems, such as language translation, Natural Language Processing (NLP), speech recognition, and image recognition, etc. Like feedforward and convolutional neural networks (CNNs), recurrent neural networks utilize training data to learn. They are distinguished by their "memory" as they take information from prior input via a feedback loop to influence the current input and output. An output from the output layer in a neural network model is fed back to the model through the feedback. The variations of weights in the hidden layer(s) will be adjusted to fit the expected outputs better while training the model. This will allow the model to provide results with far fewer mistakes.

The neural network is featured with the feedback loop to adjust the system output dynamically as it learns from the new data. In machine learning, backpropagation and feedback loops are used to train an AI model and continuously improve it upon usage. As the incoming data that the model receives increases, there are more opportunities for the model to learn from the data. The feedback loops, or backpropagation algorithms, identify inconsistencies and feed the corrected information back into the model as an input.

Even though the AI/MI, model is trained well, with large sets of labeled data and concepts, after a while, the models' performance may decline while adding new, unlabeled input due to many reasons which include, but not limited to, concept drift, recall precision degradation due to drifting away from true positives, and data drift over time. A feedback loop to the model keeps the AI results accurate and ensures that the model maintains its performance and improvement, even when new unlabeled data is assimilated. A feedback loop refers to the process by which an AI model's predicted output is reused to train new versions of the model.

Initially, when the AI/ML model is trained, a few labeled samples comprising both positive and negative examples of the concepts (for e.g., vehicle, tire orientation) are used that are meant for the model to learn. Afterward, the model is tested using unlabeled data. By using, for example, deep learning and neural networks, the model can then make predictions on whether the desired concept/s (e.g., point of lane disappearance, probability of collision when a lane marker is detected for a lane disappearing, etc.) are in unlabeled images. Each image is given a probability score where higher scores represent a higher level of confidence in the models' predictions. Where a model gives an image a high probability score, it is auto labeled with the predicted concept. However, in the cases where the model returns a low probability score, this input may be sent to a controller (may be a human moderator) which verifies and, as necessary, corrects the result. The human moderator may be used only in exceptional cases. The feedback loop feeds labeled data, auto-labeled or controller-verified, back to the model dynamically and is used as training data so that the system can improve its predictions in real-time and dynamically.

**FIG. 12B** shows a structure of the neural network / machine learning model with reinforcement learning. The network receives feedback from authorized networked environments. Though the system is similar to supervised learning, the feedback obtained in this case is evaluative not instructive, which means there is no teacher as in supervised learning. After receiving the feedback, the network performs adjustments of the weights to get better predictions in the future. Machine learning techniques, like deep learning, allow models to take labeled training data and learn to recognize those concepts in subsequent data and images. The model may be fed with new data for testing, hence by feeding the model with data it has already predicted over, the training gets reinforced. If the machine learning model has a feedback loop, the learning is further reinforced with a reward for each true positive of the output of the system. Feedback loops ensure that AI results do not stagnate. By incorporating a feedback loop, the model output keeps improving dynamically and over usage/time.

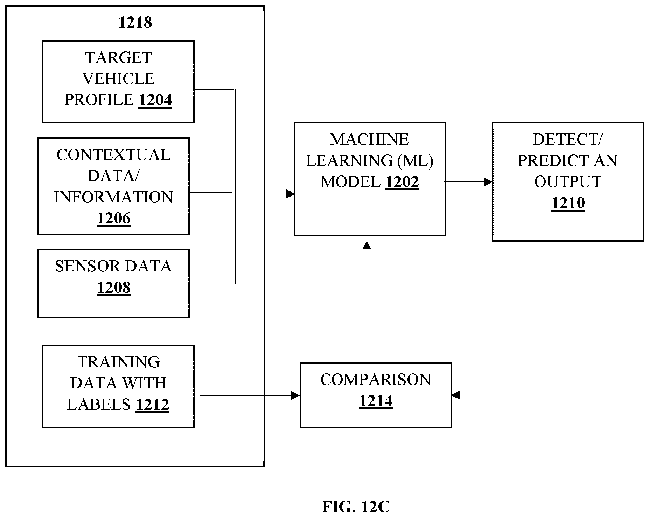

**FIG. 12C** shows an example block diagram for detecting an impact zone using a machine learning model. The machine learning model 1202 may take as input any data associated with the host vehicle and the neighboring vehicle and learn to identify features within the data that are predictive of lane change/ speed change/ turning path/ trajectory. The training data sample may include, for example, the neighboring vehicles information 1204, such as the size, dimensions, vehicle type, vehicle model, weight, length, etc. In an embodiment, it relates to systems and methods that identify a neighboring vehicle and its features in real time using an on-board camera and/or other sensors. This vehicle identification and feature information are transmitted to the cloud, where the vehicle identification is coupled with available turning radius and trajectory predictions in the case of a previously identified vehicle of similar class and built having similar characteristics. Subsequently, the information is used to compute/ estimate a lane change, a speed change, and a turning trajectory. The systems and methods of the present disclosure may also provide data analytics information that may be used later to improve vehicle safety. When a host vehicle is near a lane reduction, sensors and cameras of the host vehicle and a facial recognition algorithm or the like may be used to detect the vehicle characteristics and estimate an action profile of the neighboring vehicle.

In an embodiment, the training data sample may also include current contextual information 1206 relating to the surrounding environment. This may include, for example, location of the vehicle, current weather conditions, temperature, time of day, traffic conditions in the region, other obstacles, etc. The system may also garner contextual information 1206 from a device associated with the vehicle. For example, through an application installed on the device, such as Google^{®} maps and location services, the system may know the vehicle details.

Real-time sensor data 1208 may include, for example, video, image, audio, infrared, temperature, 3D modeling, and any other suitable types of data that capture the current state around the host vehicle. In an embodiment, the real-time sensor data may be processed using one or more machine learning models 1202 trained and based on similar types of data to predict real-time features of the neighboring vehicle. The real-time features may include, for example, the neighboring vehicle size, shape, dimensions, signal lights, etc. Current information about the target may be used for the estimation of time to reach a point of lane disappearing and prediction of neighboring vehicle action. For example, currently detected sensor data and/or previously known information about the neighboring vehicle class and / or road obstacles may be used to predict a collision.

The sensor data may be received from, for example and without limitation, global navigation satellite systems sensor(s) (e.g., Global Positioning System sensor(s)), RADAR sensor(s), ultrasonic sensor(s), LIDAR sensor(s), inertial measurement unit (IMU) sensor(s) (e.g., accelerometer(s), gyroscope(s), magnetic compass(es), magnetometer(s), etc.), microphone(s), stereo camera(s) , wide-view camera(s) (e.g., fisheye cameras), infrared camera(s), surround camera(s) (e.g., 360 degree cameras), long-range and/or mid-range camera(s) , speed sensor(s) (e.g., for measuring the speed of the vehicle), vibration sensor(s), steering sensor(s), brake sensor(s) (e.g., as part of the brake sensor system), and/or other sensor types.

Any of the aforementioned types of data (e.g., neighboring vehicle data 1204, contextual information 1206, sensor data 1208, or any other data) may correlate with the impact zone and the safe zone computations, and such correlation may be automatically learned by the machine learning model 1202. In an embodiment, during training, the machine learning model 1202 may process the training data sample (e.g., neighboring vehicle 1204 and/or contextual information 1206) and, based on the current parameters of the machine learning model 1202, detect or predict an output which may be a collision probability and / or safe zone and collision zone 1210. The detection or prediction of a collision probability and / or safe zone and collision zone 1210 may depend on the training data with labels 1212 associated with the training data sample 1218. Predicting a collision probability and / or safe zone and collision zone refers to predicting a future event based on past and present data and most commonly by analysis, estimation of trends or data patterns. Prediction or predictive analysis employs probability based on the data analyses and processing. Detection of collision probability and / or safe zone and collision zone refers to an onset of the event and the system detecting the same. Predicted events may or may not turn into a collision based on how the turn of events happens. In an embodiment, during training, the detected event at 1210 and the training data with labels 1212 may be compared at 1214. For example, the comparison 1214 may be based on a loss function that measures a difference between the detected collision event 1210 and the training data with labels 1212. Based on the comparison at 1214 or the corresponding output of the loss function, a training algorithm may update the parameters of the machine learning model 1202, with the objective of minimizing the differences or loss between subsequent predictions or detections of the event 1210 and the corresponding labels 1212. By iteratively training in this manner, the machine learning model 1202 may "learn" from the different training data samples and become better at detecting various collision events at 1210 that are similar to the ones represented by the training labels at 1212. In an embodiment, the machine learning model 1202 is trained using data which is specific to a type of target for which the model is used for detecting a collision to estimate safe zone and impact zone. In an embodiment, the machine learning model 1202 is trained using data which is general to the vehicle types and is used for detecting a collision probability and thus determining a safe and impact zone.

Using the training data, a machine learning model 1202 may be trained so that it recognizes features of input data that signify or correlate to certain event types. For example, a trained machine learning model 1202 may recognize data features that signify the likelihood of an emergency situation, as an actionable event. Through training, the machine learning model 1202 may learn to identify predictive and non-predictive features and apply the appropriate weights to the features to optimize the machine learning model's 1202 predictive accuracy. In embodiments where supervised learning is used and each training data sample 1218 has a label 1212, the training algorithm may iteratively process each training data sample 1218 (including neighboring vehicle data 1204, contextual information 1206, and/or sensor data 1208), and generate a prediction of collision 1210 based on the model's 1202 current parameters. Based on the comparison 1214 results, the training algorithm may adjust the model's 1202 parameters/configurations (e.g., weights) accordingly to minimize the differences between the generated predictions of collision event 1210 and the corresponding labels 1212. Any suitable machine learning model and training algorithm may be used, including, e.g., neural networks, decision trees, clustering algorithms, and any other suitable machine learning techniques. Once trained, the machine learning model 1202 may take input data associated with a neighboring vehicle and output one or more predictions that indicate a collision probability based on host vehicle location and may suggest a safe location to host vehicle.

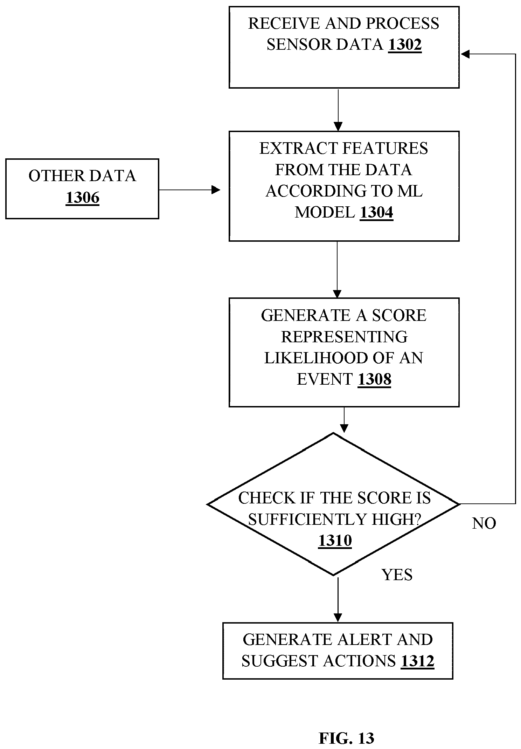

FIG. 13 shows an example flow chart for detecting a collision with the host vehicle's current location using a machine learning model. The system may receive data associated with sensor output(s) from one or more sensors in the host vehicle as shown at 1302. Any type of sensor may be used to gather data pertaining to the neighboring vehicle. A sensor output may be, for example, images, videos, audios, LiDAR measures, infrared measures, temperature measures, GPS data, or any other information measured or detected by sensors. In an embodiment, a sensor output may be the result of one or more sensors capturing environmental information associated with the surroundings of the host vehicle. For example, sensor output may be associated with a passenger in the vehicle including the driver. In an embodiment, data associated with sensor output may include the raw sensor output (e.g., the images, videos, audios, etc.) and/or data derived from processing the sensor output. As an example, derivative data from image, video or LiDAR data may include data representing identified objects, motion, gestures, facial expressions, posture, eye position, etc. The system may receive any data associated with the sensor output from sensors, including raw sensory output and/or any derivative data. In an embodiment, the system may process the received data and identify any actionable event of interest using a machine learning model, trained using a set of training data.

As shown at 1304, the system may extract features from the received data according to a machine learning model. The machine learning model is able to automatically do so based on what it learned during the training process. In an embodiment, appropriate weights that were learned during the training process may be applied to the features.

At step 1308, the machine learning model, based on the features of the received data, may generate a score representing a likelihood or confidence that the received data is associated with a particular event type, e.g., a collision due to a particular type of vehicle at an intersection, etc.

As shown at 1310, the system may determine whether the score is sufficiently high relative to a threshold or criteria to warrant certain action. If the score is not sufficiently high, thus indicating a false-positive, the system may return to step 1302 and continue to monitor subsequent incoming data. On the other hand, if the score is sufficiently high, then at step 1312 the system may generate an appropriate alert and/or determine an appropriate action/response. In an embodiment, the system may transmit alerts to appropriate recipients based on the detected event types. For instance, an alert is generated in the host vehicle, and a message is sent to nearby vehicles.

In an embodiment, the system may repeat one or more steps of the method of FIG. 13, where appropriate. In an embodiment, the steps 1302 to 1312 may be performed by the system, any combination of those steps may be performed by any other computing system, for example a remote network or a cloud network. In an embodiment, where machine learning models are used for making such determination, the system may transmit a trained machine learning model to the computing system in the vehicle to allow event-detection to occur locally. This may be desirable since sensor data may be overly large to transmit to the remote system in a timely fashion.

In an embodiment, the system is provided, wherein the facial expression recognition module utilizes a Convolutional Neural Networks (CNN) pre-training process; and/or wherein the machine learning (ML) algorithm contains a bounding box procedure around the subject's face; and/or wherein the bounding box procedure utilizes a Viola-Jones detection algorithm; and/or wherein the face recognition module utilizes Facial Expression Recognition (FER) algorithms. In an embodiment, one or more currently obtained facial expressions from the camera are compared to thresholds for pre-trained emergency classifications and determine when a current classification is an emergency. The use of a recurrent neural network architecture comes from its ability to use past, temporal information for inference on current inputs. Long short term memories (LSTMs) offer a computationally efficient way to train these networks. By virtue of this training mechanism, the model can predict given real time video input when a collision is imminent given a host vehicle location. According to an embodiment of the system, the bounding box algorithm is used in conjunction with a machine learning algorithm for object detection, wherein the machine learning algorithm is a convolutional neural network (CNN).

In an embodiment, the system may comprise a cyber security module. In one aspect, a secure communication management (SCM) computer device for providing secure data connections is provided. The SCM computer device includes a processor in communication with memory. The processor is programmed to receive, from a first device, a first data message. The first data message is in a standardized data format. The processor is also programmed to analyze the first data message for potential cyber security threats. If the determination is that the first data message does not contain a cyber security threat, the processor is further programmed to convert the first data message into a first data format associated with the vehicle environment and transmit the converted first data message to the vehicle system using a first communication protocol associated with the vehicle system. According to an embodiment, secure authentication for data transmissions comprises, provisioning a hardware-based security engine (HSE) located in communications system, said HSE having been manufactured in a secure environment and certified in said secure environment as part of an approved network; performing asynchronous authentication, validation and encryption of data using said HSE, storing user permissions data and connection status data in an access control list used to define allowable data communications paths of said approved network, enabling communications of the communications system with other computing system subjects to said access control list, performing asynchronous validation and encryption of data using security engine including identifying a user device (UD) that incorporates credentials embodied in hardware using a hardware-based module provisioned with one or more security aspects for securing the system, wherein security aspects comprising said hardware-based module communicating with a user of said user device and said HSE.

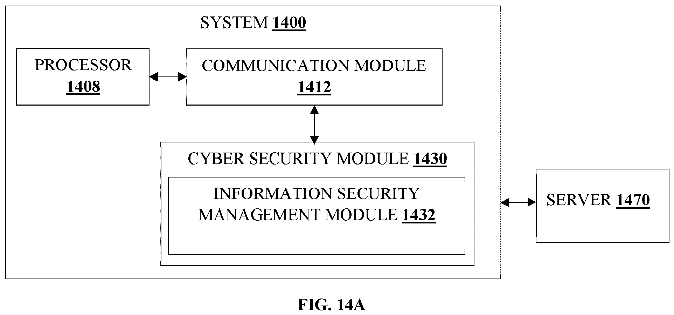

**FIG. 14A** shows the block diagram of the cyber security module according to an embodiment. Referring to **FIG. 14A** the communication of data between the system 1400 comprising a processor 1408 and the server 1470 through the communication module 1412 is first verified by the information security management module 1432 before being transmitted from the system 1400 to the server 1470 or from the server 1470 to the system 1400. The information security management module is operable to analyze the data for potential cyber security threats, to encrypt the data when no cyber security threat is detected, and to transmit the data encrypted to the system or the server. The communication of data between the system 1400 of the vehicle and the neighboring vehicle's communication device through the communication module 1412 of the host vehicle is also first verified by the information security management module 1432 before being transmitted from the system 1400 of the vehicle and the neighboring vehicle's communication device to the server 1470 or from the neighboring vehicle's communication device to the system 1400.

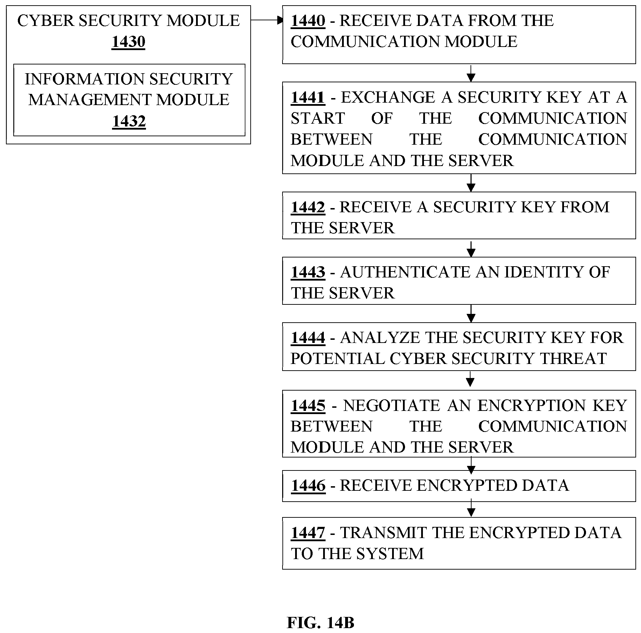

In an embodiment, the cyber security module further comprises an information security management module providing isolation between the system and the server. **FIG. 14B** shows the flowchart of securing the data through the cyber security module 1430. At step 1440, the information security management module is operable to receive data from the communication module. At step 1441, the information security management module exchanges a security key at a start of the communication between the communication module and the server. At step 1442, the information security management module receives a security key from the server. At step 1443, the information security management module authenticates an identity of the server by verifying the security key. At step 1444, the information security management module analyzes the security key for potential cyber security threats. At step 1445, the information security management module negotiates an encryption key between the communication module and the server. At step 1446, the information security management module receives the encrypted data. At step 1447, the information security management module transmits the encrypted data to the server when no cyber security threat is detected.

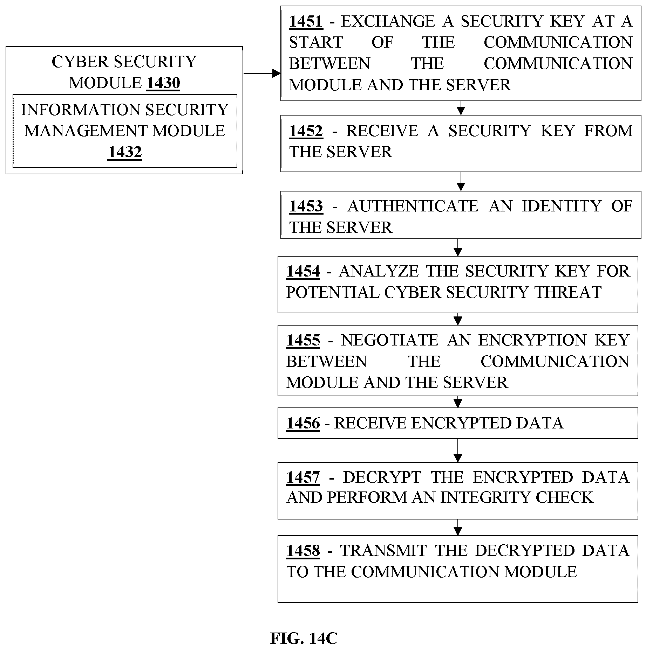

In an embodiment, **FIG. 14C** shows the flowchart of securing the data through the cyber security module 1430. At step 1451, the information security management module is operable to: exchange a security key at a start of the communication between the communication module and the server. At step 1452, the information security management module receives a security key from the server. At step 1453, the information security management module authenticates an identity of the server by verifying the security key. At step 1454, the information security management module analyzes the security key for potential cyber security threats. At step 1455, the information security management module negotiates an encryption key between the communication module and the server. At step 1456, the information security management module receives encrypted data. At step 1457, the information security management module decrypts the encrypted data, and performs an integrity check of the decrypted data. At step 1458, the information security management module transmits the decrypted data to the communication module when no cyber security threat is detected.

In an embodiment, the integrity check is a hash-signature verification using a Secure Hash Algorithm 256 (SHA256) or a similar method.

In an embodiment, the information security management module is configured to perform asynchronous authentication and validation of the communication between the communication module and the server.

In an embodiment, the information security management module is configured to raise an alarm if a cyber security threat is detected. In an embodiment, the information security management module is configured to discard the encrypted data received if the integrity check of the encrypted data fails.

In an embodiment, the information security management module is configured to check the integrity of the decrypted data by checking accuracy, consistency, and any possible data loss during the communication through the communication module.

In an embodiment, the server is physically isolated from the system through the information security management module. When the system communicates with the server as shown in **FIG. 14A****,** identity authentication is first carried out on the system and the server. The system is responsible for communicating/exchanging a public key of the system and a signature of the public key with the server. The public key of the system and the signature of the public key are sent to the information security management module. The information security management module decrypts the signature and verifies whether the decrypted public key is consistent with the received original public key or not. If the decrypted public key is verified, the identity authentication is passed. Similarly, the system and the server carry out identity authentication on the information security management module. After the identity authentication is passed on to the information security management module, the two communication parties, the system, and the server, negotiate an encryption key and an integrity check key for data communication of the two communication parties through the authenticated asymmetric key. A session ID number is transmitted in the identity authentication process, so that the key needs to be bound with the session ID number; when the system transmits data to the outside, the information security gateway receives the data through the communication module, performs integrity authentication on the data, then encrypts the data through a negotiated secret key, and finally transmits the data to the server through the communication module. When the information security management module receives data through the communication module, the data is decrypted first, integrity verification is carried out on the data after decryption, and if verification is passed, the data is sent out through the communication module; otherwise, the data is discarded.

In an embodiment, the identity authentication is realized by adopting an asymmetric key with a signature.

In an embodiment, the signature is realized by a pair of asymmetric keys which are trusted by the information security management module and the system, wherein the private key is used for signing the identities of the two communication parties, and the public key is used for verifying that the identities of the two communication parties are signed. Signing identity comprises a public and a private key pair. In other words, signing identity is referred to as the common name of the certificates which are installed in the user's machine.

In an embodiment, both communication parties need to authenticate their own identities through a pair of asymmetric keys, and a task in charge of communication with the information security management module of the system is identified by a unique pair of asymmetric keys.

In an embodiment, the dynamic negotiation key is encrypted by adopting an Rivest-Shamir-Adleman (RSA) encryption algorithm. RSA is a public-key cryptosystem that is widely used for secure data transmission. The negotiated keys include a data encryption key and a data integrity check key.

In an embodiment, the data encryption method is a Triple Data Encryption Algorithm (3DES) encryption algorithm. The integrity check algorithm is a Hash-based Message Authentication Code (HMAC-MD5-128) algorithm. When data is output, the integrity check calculation is carried out on the data, the calculated Message Authentication Code (MAC) value is added with the header of the value data message, then the data (including the MAC of the header) is encrypted by using a 3DES algorithm, the header information of a security layer is added after the data is encrypted, and then the data is sent to the next layer for processing. In an embodiment the next layer refers to a transport layer in the Transmission Control Protocol / Internet Protocol (TCP/IP) model.

The information security management module ensures the safety, reliability, and confidentiality of the communication between the system and the server through the identity authentication when the communication between the two communication parties starts the data encryption and the data integrity authentication. The method is particularly suitable for an embedded platform which has less resources and is not connected with a Public Key Infrastructure (PKI) system and can ensure that the safety of the data on the server cannot be compromised by a hacker attack under the condition of the Internet by ensuring the safety and reliability of the communication between the system and the server.

The embodiments described herein include mere examples of systems and computer-implemented methods. It is, of course, not possible to describe every conceivable combination of components and/or computer-implemented methods for purposes of describing the one or more embodiments, but one of ordinary skill in the art can recognize that many further combinations and/or permutations of the one or more embodiments are possible. Furthermore, to the extent that the terms "includes, " "has, " "possesses, " and the like are used in the detailed description, claims, appendices and/or drawings such terms are intended to be inclusive in a manner similar to the term "comprising" as "comprising" is interpreted when employed as a transitional word in a claim.

Other specific forms may embody the present invention without departing from its spirit or characteristics. The described embodiments are in all respects illustrative and not restrictive. Therefore, the appended claims rather than the description herein indicate the scope of the invention. All variations which come within the meaning and range of equivalency of the claims are within their scope.

Various non-limiting aspects of various embodiments described herein are presented in the following clauses.
1. A system, comprising:
   a processor, a computer vision module, a communication module, and a control system, wherein the system is configured to:
   detect, by the processor, a lane reduction in a nearest disappearing lane;
   detect, by the computer vision module, a neighboring vehicle and a driving action of the neighboring vehicle in the nearest disappearing lane;
   detect, by the computer vision module, a license plate number of the neighboring vehicle;
   receive, by the communication module, a signal from the neighboring vehicle for a driving mode;
   detect, by the computer vision module, a point of lane disappearance in the nearest disappearing lane;
   calculate, by the processor, a time interval for the neighboring vehicle to reach to the point of lane disappearance;
   execute, by the processor, a risk assessment of a collision based on the driving action; and
   transmit, via the communication module, a control command to an actuator system of a host vehicle based on the risk assessment.
2. The system of clause 1, wherein the system is configured to be a component of the host vehicle.
3. The system of clause 2, wherein the host vehicle is a first autonomous vehicle.
4. The system of clause 1, wherein the neighboring vehicle is one of a second autonomous vehicle and a non-autonomous vehicle.
5. The system of clause 4, wherein the driving mode is received via one of a V2X communication or a V2V communication.
6. The system of clause 5, wherein the driving mode is one of an autonomous mode and a manual mode.
7. The system of clause 1, wherein the lane reduction is detected via the processor using information received via at least one of a GPS, a traffic signal received via traffic control processor and the computer vision module.
8. The system of clause 1, wherein the neighboring vehicle is detected using at least one of a radar, a lidar, a camera, a GPS, and a machine learning algorithm.
9. The system of clause 1, wherein the lane reduction is detected using at least one of a radar, a lidar, a camera, a GPS, and a machine learning algorithm.
10. The system of clause 1, wherein a vehicle type of the neighboring vehicle is determined from the license plate number by referencing a database.
11. The system of clause 1, wherein the signal from the neighboring vehicle is received via a Vehicle-to-Vehicle (V2V) communication.
12. The system of clause 11, wherein the V2V communication is based on a wireless communication protocol using at least one of a Dedicated Short-Range Communications (DSRC), and a Cellular Vehicle-to-Everything (C-V2X) technology.
13. The system of clause 1, wherein the signal from the neighboring vehicle is received via an internet connection.
14. The system of clause 6, wherein the driving mode of the neighboring vehicle is the manual mode.
15. The system of clause 194, wherein the driving action of the neighboring vehicle is detected by capturing at least one of a steering angle, a steering rate, a velocity, and an acceleration via the computer vision module.
16. The system of clause 15, wherein the host vehicle is configured to establish a communication with the neighboring vehicle to obtain the steering angle, the velocity, and the acceleration.
17. The system of clause 19, wherein the collision can occur during a lane change by the neighboring vehicle.
18. The system of clause 17, wherein the host vehicle is configured to establish a communication with the neighboring vehicle and provide a boundary for an impact zone as the neighboring vehicle is moving to incorporate into the lane change.
19. The system of clause 18, wherein the host vehicle establishes communication with the neighboring vehicle and requests an adjustment in a motion trajectory while incorporating into the lane change.
20. The system of clause 18, wherein the host vehicle establishes communication with the neighboring vehicle and provides a boundary of the impact zone of the neighboring vehicle.
21. The system of clause 1, wherein the point of lane disappearance is estimated by performing lane width detection.
22. The system of clause 18, wherein the control command is generated by determining a collision avoidance maneuver for the host vehicle to avoid the impact zone; and
   autonomously executing the collision avoidance maneuver by the host vehicle.
23. The system of clause 1, wherein the system is configured to determine a time period for reaching the point of lane disappearance by the neighboring vehicle.
24. The system of clause 1, wherein the system is configured to transmit a second signal for changing the driving action to avoid the collision.
25. A vehicle comprising a system further comprising:
   a processor, a computer vision module, a communication module, and a control system,
   wherein the system is configured to:
   detect, by the processor, a lane reduction in a nearest disappearing lane;
   detect, by the computer vision module, a neighboring vehicle and a driving action of the neighboring vehicle in the nearest disappearing lane;
   detect, by the computer vision module, a license plate of the neighboring vehicle;
   receive, by the communication module, a first signal from the neighboring vehicle for a driving mode;
   detect, by the computer vision module, a point of lane disappearance in the nearest disappearing lane;
   determine, by the processor, a time interval for the neighboring vehicle to reach to the point of lane disappearance;
   execute, by the processor, a risk assessment of a collision based on the driving action; and
   transmit, via the communication module, a control command to an actuator system of the vehicle based on the risk assessment.
26. A method to detect and prevent possible accidents in lane reduction by a host vehicle, the method comprising:
   detecting a lane reduction in a nearest disappearing lane;
   detecting a neighboring vehicle and a driving action of the neighboring vehicle in the nearest disappearing lane;
   detecting a license plate of the neighboring vehicle;
   receiving a first signal from the neighboring vehicle for a driving mode;
   detecting a point of lane disappearance in the nearest disappearing lane;
   determining a time interval for the neighboring vehicle to reach to the point of lane disappearance;
   executing a risk assessment of a collision based on the driving action and the time interval; and
   transmitting a control command to an actuator system of the host vehicle based on the risk assessment.
27. The method of clause 26, wherein the lane reduction is detected using at least one of a GPS information, a traffic sign and a lane marking.
28. The method of clause 27, wherein the method further comprises detecting a cone distance to the lane marking.
29. The method of clause 26, wherein the neighboring vehicle is detected using a camera of a host vehicle.
30. The method of clause 29, wherein the license plate is detected using the camera.
31. The method of clause 29, wherein the camera is connected to a computer vision system of the host vehicle.
32. The method of clause 31, wherein the method further comprises determining a current position of the neighboring vehicle and the host vehicle.
33. The method of clause 32, wherein the current position of the neighboring vehicle is detected by a radar sensor of the computer vision module of the host vehicle.
34. The method of clause 32, wherein the current position of the host vehicle and the current position of the neighboring vehicle are detected using a GPS of a global navigation satellite system.
35. The method of clause 32, wherein the method further comprises predicting a lane change by the neighboring vehicle.
36. The method of clause 35, wherein the lane change is predicted by capturing at least one of a steering angle, a steering rate, a velocity, and an acceleration.
37. The method of clause 31, wherein the method further comprises detecting a lane change by the neighboring vehicle.
38. The method of clause 37, wherein the lane change is detected by a turn signal of the neighboring vehicle using the computer vision system.
39. The method of clause 38, wherein the lane change by the neighboring vehicle is detected by tracking a position and a movement of the neighboring vehicle over time.
40. The method of clause 38, wherein the lane change by the neighboring vehicle is detected via a sensor of the host vehicle by detecting a speed and a direction of movement of the neighboring vehicle, wherein the sensor is at least one of a radar and a lidar.
41. The method of clause 26, wherein the method further comprises detecting a lane width of the nearest disappearing lane.
42. A non-transitory computer-readable medium having stored thereon instructions executable by a computer system to execute operations comprising:
   detecting a lane reduction in a nearest disappearing lane;
   detecting a neighboring vehicle and a driving action of the neighboring vehicle in the nearest disappearing lane;
   detecting a license plate of the neighboring vehicle;
   receiving a first signal from the neighboring vehicle for a driving mode;
   detecting a point of lane disappearance in the nearest disappearing lane;
   determining a time interval for the neighboring vehicle to reach to the point of lane disappearance;
   executing a risk assessment of a collision based on the driving action and the time interval; and
   transmitting a control command to an actuator system of a host vehicle based on the risk assessment.
43. A system, comprising:
   a processor, a computer vision system, and a control system, wherein the system is configured to be a component of a host vehicle;
   wherein the processor is configured to:
   detect a lane reduction in a nearest disappearing lane; ;
   detect a neighboring vehicle in the nearest disappearing lane;
   detect license plate of the neighboring vehicle;
   receive a first signal from the neighboring vehicle for a driving mode;
   detect a point of lane disappearance in the nearest disappearing lane;
   determine a time interval for the neighboring vehicle to reach to the point of lane disappearance;
   predict a driving action of the neighboring vehicle;
   execute a risk assessment based on the driving action and the time interval; and
   transmit a risk signal to the neighboring vehicle based on the risk assessment.
44. The system of clause 43, wherein the system is further configured to transmit a control command to an actuator system of the host vehicle based on the risk assessment.
45. A method comprising:
   detecting a lane reduction in a nearest disappearing lane;
   detecting a neighboring vehicle in the nearest disappearing lane;
   detecting license plate of the neighboring vehicle;
   receiving a first signal from the neighboring vehicle for a driving mode;
   detecting a point of lane disappearance in the nearest disappearing lane;
   determining a time interval for the neighboring vehicle to reach to the point of lane disappearance;
   predicting a driving action of the neighboring vehicle;

   executing a risk assessment based on the driving action and the time interval; and
   transmitting a risk signal to the neighboring vehicle based on the risk assessment.
46. The method of clause 45, wherein the method is executed by a host vehicle.
47. The method of clause 46, wherein the host vehicle is an autonomous vehicle.
48. The method of clause 46, further comprises transmitting a control command to an actuator system of the host vehicle based on the risk assessment.
49. A non-transitory computer-readable medium having stored thereon instructions executable by a computer system to execute operations comprising:
   detecting a lane reduction;
   detecting a neighboring vehicle in a nearest disappearing lane;
   detect license plate of the neighboring vehicle and check in a license database if that license plate number is assigned to a non-autonomous;
   performing lane width detection to detect a point of lane disappearance in the nearest disappearing lane;
   determine a time interval for the neighboring vehicle to reach to the point of lane disappearance;
   predicting a driving action of the neighboring vehicle;
   executing a risk assessment based on the driving action and the time interval; and
   transmitting a risk signal to the neighboring vehicle based on the risk assessment.

## Claims

1. A system (300), comprising:
a processor (304), a computer vision module (306), a communication module (308), and a control system (310),
wherein the system (300) is configured to:
detect, by the processor (304), a lane reduction in a nearest disappearing lane (902);
detect, by the computer vision module (306), a neighboring vehicle, and a driving action of the neighboring vehicle, in the nearest disappearing lane (904);
detect, by the computer vision module (306), a license plate number of the neighboring vehicle (906);
receive, by the communication module (306), a signal from the neighboring vehicle for a driving mode (908);
detect, by the computer vision module (306), a point of lane disappearance in the nearest disappearing lane (910);
determine, by the processor (304), a time interval for the neighboring vehicle to reach to the point of lane disappearance (912);
execute, by the processor (304), a risk assessment of a collision based on the driving action (914); and
transmit, via the communication module (308), a control command to an actuator system (318) of a host vehicle based on the risk assessment (916).

2. The system (300) of claim 1, wherein the system (300) is configured to be a component of the host vehicle.

3. The system (300) of claim 1, wherein the driving mode is one of an autonomous mode and a manual mode.

4. The system (300) of claim 1, wherein the neighboring vehicle is detected using at least one of a radar, a lidar, a camera, a GPS, and a machine learning algorithm, and/or wherein a vehicle type of the neighboring vehicle is determined from the license plate number by referencing a license database 322.

5. The system (300) of claim 1, wherein the signal from the neighboring vehicle is received via a Vehicle-to-Vehicle (V2V) communication, and wherein the V2V communication is in particular based on a wireless communication protocol using at least one of a Dedicated Short-Range Communications (DSRC), and a Cellular Vehicle-to-Everything (C-V2X) technology.

6. The system (300) of claim 1, wherein the driving action of the neighboring vehicle is detected by capturing at least one of a steering angle, a steering rate, a velocity, and an acceleration via the computer vision module (306).

7. The system (300) of claim 1, wherein the point of lane disappearance is estimated by performing lane width detection.

8. The system (300) of claim 1, wherein the system (300) is configured to calculate a time period for reaching the point of lane disappearance by the neighboring vehicle.

9. The system (300) of claim 1, wherein the system (300) is configured to transmit a second signal for changing the driving action to avoid the collision.

10. A method to detect and prevent possible accidents in lane reduction by a host vehicle, the method comprising:
detecting a lane reduction in a nearest disappearing lane (902);
detecting a neighboring vehicle and a driving action of the neighboring vehicle, in the nearest disappearing lane (904);
detecting a license plate of the neighboring vehicle (906);
receiving a first signal from the neighboring vehicle for a driving mode (908);
detecting a point of lane disappearance in the nearest disappearing lane (910);
determining a time interval for the neighboring vehicle to reach to the point of lane disappearance (912);
executing a risk assessment of a collision based on the driving action and the time interval (914); and
transmitting a control command to an actuator system of the host vehicle based on the risk assessment (916).

11. The method of claim 10, wherein the lane reduction is detected using at least one of a GPS information, a traffic sign and a lane marking.

12. The method of claim 10, wherein the method further comprises detecting a cone distance to the lane marking, wherein the license plate of the neighboring vehicle is in particular detected using a camera, and wherein the camera is preferably connected to a computer vision system.

13. The method of claim 10, wherein the method further comprises predicting a lane change by the neighboring vehicle; and wherein the lane change is predicted by capturing at least one of a steering angle, a steering rate, a velocity, and an acceleration.

14. The method of claim 13, wherein the method further comprises detecting the lane change by the neighboring vehicle; and wherein the lane change by the neighboring vehicle is detected via a sensor by detecting a speed and a direction of movement of the neighboring vehicle, wherein the sensor is at least one of a radar and a lidar.

15. A non-transitory computer-readable medium having stored thereon instructions executable by a computer system to execute operations comprising:
detecting a lane reduction in a nearest disappearing lane (902);
detecting a neighboring vehicle and a driving action of the neighboring vehicle in the nearest disappearing lane (904);
detecting a license plate of the neighboring vehicle (906);
receiving a first signal from the neighboring vehicle for a driving mode (908);
detecting a point of lane disappearance in the nearest disappearing lane (910);
determining a time interval for the neighboring vehicle to reach to the point of lane disappearance (912);
executing a risk assessment of a collision based on the driving action and the time interval (914); and
transmitting a control command to an actuator system of a host vehicle based on the risk assessment (916).
